# EUROPÄISCHE PATENTSCHRIFT

(11) **EP 3 459 852 B1**
(45) Veröffentlichungstag und Bekanntmachung des Hinweises auf die Patenterteilung: **12.08.2020**
(21) Anmeldenummer: 18196423.0
(22) Anmeldetag: 25.09.2018
(51) Int. Cl.: B64D 11/06, B61D 33/00, B60N 2/30, B60N 2/24, B60N 2/02, B60N 2/68, B60N 2/75

(54) **PASSAGIERSITZANORDNUNG, PASSAGIERSITZSYSTEM UND VERFAHREN ZUR INSTALLATION EINES PASSAGIERSITZSYSTEMS**
PASSENGER SEAT ASSEMBLY, SYSTEM OF PASSENGER SEATS AND METHOD FOR INSTALLING A PASSENGER SEAT SYSTEM
DISPOSITIF DE SIÈGE DE PASSAGER, SYSTÈME DE SIÈGE DE PASSAGER ET PROCÉDÉ D'INSTALLATION D'UN SYSTÈME DE SIÈGE DE PASSAGER

(30) Priorität: 26.09.2017 DE 102017122252
(43) Veröffentlichungstag der Anmeldung: 27.03.2019
(73) Patentinhaber: Airbus Operations GmbH, 21129 Hamburg (DE)
(72) Erfinder: Ehlers, Bernd, 21129 Hamburg (DE); Behrens, Stefan, 28832 Achim (DE); Herzog, Mark, 21129 Hamburg (DE); Schulz, Alexander, 21129 Hamburg (DE); Strieth-Kalthoff, Max, 21129 Hamburg (DE); Giesa, Hans-Gerhard, 21129 Hamburg (DE); Jacobsen, Sönke, 21129 Hamburg (DE); Weifenbach, Jörg, 21129 Hamburg (DE)
(74) Vertreter: Schornack, Oliver

(56) Entgegenhaltungen:
- WO-A1-2010/131014
- WO-A2-2011/077363
- US-A1- 2007 126 270
- US-A1- 2014 138 991
- US-B1- 6 991 285

## Beschreibung

Die vorliegende Erfindung betrifft eine Passagiersitzanordnung zur Installation in einem Luftfahrzeug, ein die Passagiersitzanordnung umfassendes Passagiersitzsystem und ein Verfahren zur Installation eines derartigen Passagiersitzsystems.

Die Konfigurierbarkeit von Passagierkabinen ist eine stetig an Bedeutung gewinnende Anforderung an Passagierflugzeuge. Diese soll eine Individualisierung und Anpassung von Passagierkabinen an die jeweilige Einsatzart des Luftfahrzeugs, zum Beispiel als Kurz-, Mittel- oder Langstreckenflugzeug, und an die zu befördernden Passagiere ermöglichen. Je nach Einsatzart des Passagierflugzeugs und der zu befördernden Personen kann eine für die jeweiligen Einsätze vorgesehene Anordnung von Passagiersitzen innerhalb der Passagierkabine variieren.

Gegenwärtig eingesetzte Passagierflugzeuge umfassen mehrere Sitzreihen, die durch Sitzbänke mit ein bis drei Sitzplätzen gebildet sind. Derartige Sitzbänke sind über einen die Sitzplätze tragenden Stützrahmen mit einem Fußboden der Passagierkabine lastübertragend verbunden. Die Sitzplätze weisen üblicherweise eine Sitzfläche und eine relativ zu dieser verschwenkbare Rückenlehne auf, die fest mit dem Stützrahmen verbunden sind. Weiterhin sind die Sitzplätze üblicherweise in Längsrichtung des Luftfahrzeugs orientiert und umfassen einen ausklappbaren Tisch, der entweder an einer Rückenlehne einer benachbarten Sitzbank oder in einer Armlehne angeordnet ist.

Um die Anordnung und Orientierung derart bereitgestellter Sitzplätze innerhalb der Flugzeugkabine zu verändern bzw. anzupassen, bedarf es üblicherweise eines Lösens und erneuten Befestigens der kompletten, die Sitzplätze tragenden Sitzbank. Sitzanordnungen mit an mehreren Positionen befestigbaren Rückenlehnenelementen sind aus den Dokumenten US 2007/126270 A1 und US 6991285 B1 bekannt.

Der Erfindung liegt die Aufgabe zugrunde, eine flexible Passagiersitzanordnung zur Installation in einem Luftfahrzeug bereitzustellen, mit der eine Anordnung von Sitzplätzen innerhalb des Luftfahrzeugs einfach und aufwandsreduziert konfiguriert werden kann auch während eines Flugbetriebs des Luftfahrzeugs. Weiterhin sollen ein die Passagiersitzanordnung umfassendes Passagiersitzsystem und ein Verfahren zur Installation eines derartigen Passagiersitzsystems angegeben werden.

Diese Aufgaben werden durch eine Passagiersitzanordnung mit den Merkmalen nach Anspruch 1, ein Passagiersitzsystem mit den Merkmalen nach Anspruch 12 und ein Verfahren zur Installation eines Passagiersitzsystems mit den Merkmalen nach Anspruch 13 gelöst.

Eine erfindungsgemäße Passagiersitzanordnung ist zur Installation in einem Luftfahrzeug, insbesondere in einer Passagierkabine des Luftfahrzeugs vorgesehen. Passagierkabinen sind üblicherweise mit mehreren in einer Längsrichtung des Luftfahrzeugs hinter- und nebeneinander angeordneten Sitzreihen ausgestattet, die jeweils mehrere Sitzplätze, beispielsweise einen bis vier Sitzplätze, für Passagiere des Luftfahrzeugs bereitstellen. Die hier vorgeschlagene Passagiersitzanordnung umfasst wenigstens eine Sitzeinheit, auf der ein Passagier während des Betriebs des Luftfahrzeugs Platz nehmen kann. Vorzugsweise umfasst die Passagiersitzanordnung mehrere Sitzeinheiten, beispielsweise drei Sitzeinheiten, und bildet eine Sitzreihe der Passagierkabine. In einem im Luftfahrzeug installierten Zustand ist die Passagiersitzanordnung vorzugsweise in einer Längsrichtung des Luftfahrzeugs hinter oder zwischen Sitzreihen in einer Passagierkabine installiert.

Die wenigstens eine Sitzeinheit umfasst ein Rückenlehnenelement und ein Sitzelement. Genauer umfasst das Rückenlehnenelement vorzugsweise eine Kopfstütze und eine Rückenlehnenfläche und ist relativ zu dem Sitzelement zwischen einer aufrechten Position und einer zurückgelehnten Position verschwenkbar. Das Sitzelement umfasst bevorzugt eine Sitzfläche zur Aufnahme eines Passagiers. Ferner kann die Passagiersitzanordnung Armlehnenelemente aufweisen, wobei jeder Sitzeinheit bevorzugt zwei Armlehnenelemente zugeordnet sind.

Die Passagiersitzanordnung umfasst ferner einen die wenigstens eine Sitzeinheit tragenden Stützrahmen, der vorzugsweise über mehrere Stützfüße lastübertragend mit einem Luftfahrzeugkabinenboden, insbesondere einer Sitzschiene des Luftfahrzeugs zum Verankern von Passagiersitzen in der Passagierkabine, verbindbar ist. Der Stützrahmen umfasst wenigstens eine Sitzhalterung, die bevorzugt jeweils einer Sitzeinheit zugeordnet ist und diese an dem Stützrahmen befestigt. Mit anderen Worten, jede der wenigstens einen Sitzeinheit ist bevorzugt an jeweils einer der wenigstens einen Sitzhalterung befestigt.

Die wenigstens eine Sitzhalterung umfasst eine erste Rückenlehnenaufnahme, an der das Rückenlehnenelement der Sitzeinheit lösbar und lastübertragend an der Sitzhalterung in einer ersten Position befestigbar ist, und eine zweite Rückenlehnenaufnahme, an der das Rückenlehnenelement lösbar und lastübertragend an der Sitzhalterung in einer zweiten Position befestigbar ist. In einem in dem Luftfahrzeug installierten Zustand der Passagiersitzanordnung ist das Rückenlehnenelement in einem an der ersten Rückenlehnenaufnahme befestigten Zustand relativ zu einem an der zweiten Rückenlehnenaufnahme befestigten Zustand relativ zu einer Längsachse des Luftfahrzeugs verschwenkt. Mit anderen Worten, indem das Rückenlehnenelement von der ersten in die zweite Position durch Lösen von der ersten Rückenlehnenaufnahme und durch Befestigen an der zweiten Rückenlehnenaufnahme bewegt wird, erfolgt ein Versetzen und ein Drehen des Rückenlehnenelements. Entsprechend ist das Rückenlehnenelement in dem an der ersten Rückenlehnenaufnahme installierten Zustand relativ zu dem an der zweiten Rückenlehnenaufnahme befestigten Zustand relativ zu der Längsachse des Luftfahrzeugs versetzt und gedreht. Vorzugsweise ist in dem installierten Zustand der Passagiersitzanordnung das Rückenlehnenelement in dem an der ersten Rückenlehnenaufnahme befestigten Zustand relativ zu dem an der zweiten Rückenlehnenaufnahme befestigten Zustand um eine Achse parallel zu einer Höhenachse des Luftfahrzeugs verschwenkt angeordnet.

Auf diese Weise kann eine Ausrichtung der Sitzeinheit verändert werden. Unter einer Ausrichtung oder Orientierung der Sitzeinheit wird vorliegend eine Richtung verstanden, in die ein auf der Sitzeinheit sitzender Passagier in einer aufrechten Position blickt. Beispielsweise kann die Rückenlehnenfläche des Rückenlehnenelements in dem an der ersten Rückenlehnenaufnahme befestigten Zustand relativ zu dem an der zweiten Rückenlehnenaufnahme befestigten Zustand gegenüberliegend angeordnet sein.

Genauer kann im in dem Luftfahrzeug installierten Zustand der Passagiersitzanordnung das Rückenlehnenelement in dem an der ersten Rückenlehnenaufnahme befestigten Zustand relativ zu dem an der zweiten Rückenlehnenaufnahme befestigten Zustand um im Wesentlichen 90° oder 180° relativ zu der Längsachse des Luftfahrzeugs verschwenkt sein. Insbesondere kann im in dem Luftfahrzeug installierten Zustand der Passagiersitzanordnung das Rückenlehnenelement in dem an der ersten Rückenlehnenaufnahme befestigten Zustand relativ zu dem an der zweiten Rückenlehnenaufnahme befestigten Zustand um im Wesentlichen 90° oder 180° um die Achse parallel zur Höhenachse des Luftfahrzeugs verschwenkt angeordnet sein.

Indem eine Passagiersitzanordnung bereitgestellt wird, bei der ein Rückenlehnenelement wahlweise in der ersten oder zweiten Position an der Sitzhalterung befestigbar ist, kann eine Ausrichtung der jeweiligen Sitzeinheiten einfach und aufwandsreduziert konfiguriert werden. Auf diese Weise kann die Passagiersitzanordnung durch Flugpersonal auch während eines Flugbetriebs des Luftfahrzeugs rekonfiguriert werden. Ein Aus- und erneuter Einbau kompletter Sitzbänke ist hierfür nicht notwendig.

Beispielsweise kann die Passagiersitzanordnung dafür vorgesehen sein, dass deren wenigstens eine Sitzeinheit während eines Lande- bzw. Startbetriebs des Luftfahrzeugs in Längsrichtung des Luftfahrzeugs orientiert ist. Wenn das Luftfahrzeug daraufhin in einen Flugbetrieb wechselt, ermöglicht die vorliegende Erfindung, dass die Passagiersitzanordnung im Flugbetrieb durch das Flugpersonal rekonfiguriert wird. Beispielsweise kann so die wenigstens eine Sitzeinheit während des Flugbetriebs in Richtung entgegen der Längsrichtung des Luftfahrzeugs ausgerichtet werden. Auf diese Weise kann ein Luftfahrzeugkabinenbereich von einem regulären Sitzbereich während des Lande- bzw. Startbetriebs, in der Sitzeinheiten hintereinander angeordneter Sitzbänke in Längsrichtung des Luftfahrzeugs ausgerichtet sind, zu einem alternativ verwendeten Sitzbereich umgestellt werden, in dem Sitzeinheiten hintereinander angeordneter Sitzbänke gegenüberliegend angeordnet sind. Die Umstellung auf den alternativ verwendeten Sitzbereich ermöglicht beispielsweise ein Essen bzw. eine Besprechung im Kreise mehrerer, sich gegenübersitzender Passagiere.

In einer Weiterentwicklung kann das Rückenlehnenelement wenigstens ein erstes Rastelement umfassen, das dazu eingerichtet ist, lösbar mit wenigstens einem komplementären, jeweils in der ersten und der zweiten Rückenlehnenaufnahme ausgebildeten zweiten Rastelement zu verrasten, um das Rückenlehnenelement lastübertragend an der Sitzhalterung in der ersten oder zweiten Position zu befestigen. Insbesondere kann das wenigstens eine erste Rastelement an wenigstens einer Verbindungsstrebe des Rückenlehnenelements ausgebildet sein. Weiterhin können die erste und die zweite Rückenlehnenaufnahme jeweils mit wenigstens einer das zweite Rastelement aufweisenden Aufnahmeöffnung versehen sein. Die Aufnahmeöffnungen sind vorzugsweise derart bereitgestellt, dass in diese die mit dem ersten Rastelement ausgebildete Verbindungsstrebe des Rückenlehnenelements einschiebbar ist, um das erste Rastelement mit einem der zweiten Rastelemente, d.h. mit dem zweiten Rastelement der ersten Rückenlehnenaufnahme und/oder mit dem zweiten Rastelement der zweiten Rückenlehnenaufnahme, zu verrasten.

Um ein einfaches Rekonfigurieren der Passagiersitzanordnung zu ermöglichen, umfasst diese einen das Rückenlehnenelement mit der ersten und/oder der zweiten Rückenlehnenaufnahme verriegelnden Verriegelungsmechanismus. Der Verriegelungsmechanismus bewirkt vorzugsweise, dass eine lastübertragende Verbindung zwischen dem Rückenlehnenelement und der Sitzhalterung entweder aufrechterhalten oder gelöst wird. Entsprechend kann der Verriegelungsmechanismus dazu eingerichtet sein, das erste Rastelement und/oder das zweite Rastelement der ersten und/oder der zweiten Rückenlehnenaufnahme zwischen einer Verrieglungsposition, in der das erste Rastelement mit dem zweiten Rastelement der ersten oder der zweiten Rückenlehnenaufnahme verrastet ist, und einer Freigabeposition, in der eine Bewegung des ersten Rastelements relativ zu dem zweiten Rastelement der ersten und/oder der zweiten Rückenlehnenaufnahme freigegeben ist, zu bewegen.

Durch den Einsatz des Verriegelungsmechanismus wird zum Befestigen und Lösen des Rückenlehnenelements kein Werkzeug benötigt. So kann ein besonders aufwandsreduziertes und schnelles Rekonfigurieren der Passagiersitzanordnung sichergestellt werden.

In einer Weiterentwicklung kann der Verriegelungsmechanismus wenigstens eine Federeinheit umfassen, die das erste Rastelement und/oder das zweite Rastelement der ersten und/oder der zweiten Rückenlehnenaufnahme in Richtung ihrer/seiner Verriegelungsposition oder Freigabeposition belastet. Indem das erste oder zweite Rastelement in Richtung ihrer Verriegelungsposition belastet werden, kann ein unerwünschtes Lösen der lastübertragenden Verbindung zwischen dem Rückenlehnenelement und der Sitzhalterung verhindert und dadurch die Betriebssicherheit der Passagiersitzanordnung erhöht werden.

Der Verriegelungsmechanismus kann einen das erste Rastelement und/oder das zweite Rastelement der ersten und/oder der zweiten Rückenlehnenaufnahme in ihrer/seiner Verriegelungsposition und/oder Sperrposition sperrenden Sperrmechanismus umfassen. Der Sperrmechanismus kann zwischen einer Sperrposition, in der eine Bewegung des ersten Rastelements und/oder des zweiten Rastelements der ersten und/oder der zweiten Rückenlehnenaufnahme zwischen ihrer/seiner Verriegelungsposition und seiner Freigabeposition gesperrt ist, und einer Freigabeposition, in der eine Bewegung des ersten Rastelements und/oder des zweiten Rastelements der ersten und/oder der zweiten Rückenlehnenaufnahme zwischen ihrer/seiner Verriegelungsposition und Freigabeposition freigegeben ist, bewegbar sein. Weiterhin kann der Sperrmechanismus eine den Sperrmechanismus in Richtung seiner Sperrposition belastende erste Feder umfassen.

In einer Weiterentwicklung kann die erste Rückenlehnenaufnahme einen ersten Verriegelungsbolzen umfassen, der den Verrieglungsmechanismus zumindest teilweise bildet, wobei an einem Umfang des ersten Verriegelungsbolzens das wenigstens eine zweite Rastelement der ersten Rückenlehnenaufnahme angeordnet sein kann. Der erste Verriegelungsbolzen kann in einer Richtung entlang seiner Längsrichtung bewegbar sein, um das zweite Rastelement der ersten Rückenlehnenaufnahme zwischen seiner Verriegelungsposition und seiner Freigabeposition zu bewegen. Insbesondere kann der erste Verriegelungsbolzen wenigstens ein Verriegelungselement aufweisen, bevorzugt in Form von wenigstens einer an dem ersten Verrieglungsbolzen versehenen Aussparung. Das wenigstens eine Verriegelungselement ist vorzugsweise dazu eingerichtet, mit einem ersten Sperrelement des Sperrmechanismus zusammenzuwirken, um eine Bewegung des ersten Verrieglungsbolzens entlang seiner Längsachse zu sperren.

Alternativ oder zusätzlich kann die zweite Rückenlehnenaufnahme einen zweiten Verriegelungsbolzen umfassen, der den Verrieglungsmechanismus zumindest teilweise bildet, wobei an einem Umfang des zweiten Verriegelungsbolzens das wenigstens eine zweite Rastelement der zweiten Rückenlehnenaufnahme angeordnet sein kann. Der zweite Verriegelungsbolzen kann in einer Richtung entlang seiner Längsrichtung bewegbar sein, um das zweite Rastelement der zweiten Rückenlehnenaufnahme zwischen seiner Verriegelungsposition und seiner Freigabeposition zu bewegen. Insbesondere kann der zweite Verriegelungsbolzen wenigstens ein Verriegelungselement aufweisen, bevorzugt in Form von wenigstens einer an dem zweiten Verrieglungsbolzen versehenen Aussparung. Das wenigstens eine Verriegelungselement des zweiten Verrieglungsbolzens ist vorzugsweise dazu eingerichtet, mit einem zweiten Sperrelement des Sperrmechanismus zusammenzuwirken, um eine Bewegung des zweiten Verrieglungsbolzens entlang seiner Längsachse zu sperren.

In einer Weiterentwicklung kann das Sitzelement lösbar und lastübertragend an der ersten Rückenlehnenaufnahme in einer ersten Position oder an der zweiten Rückenlehnenaufnahme in einer zweiten Position befestigbar sein. Dabei kann in dem im Luftfahrzeug installierten Zustand der Passagiersitzanordnung das Sitzelement in einem an der ersten Rückenlehnenaufnahme befestigten Zustand relativ zu einem an der zweiten Rückenlehnenaufnahme befestigten Zustand um die Achse parallel zur Höhenachse des Luftfahrzeugs verschwenkt sein. Insbesondere kann in dem im Luftfahrzeug installierten Zustand der Passagiersitzanordnung das Sitzelement in dem an der ersten Rückenlehnenaufnahme installierten Zustand relativ zu dem an der zweiten Rückenlehnenaufnahme installierten Zustand um im Wesentlichen 90° oder 180° um die Achse parallel zur Höhenachse des Luftfahrzeugs verschwenkt sein. Die Passagiersitzanordnung ist bevorzugt derart ausgebildet, dass das Rückenlehnenelement an der ersten Rückenlehnenaufnahme in einem Zustand befestigbar ist, in dem das Sitzelement an der zweiten Rückenlehnenaufnahme befestigt ist, oder das Rückenlehnenelement an der zweiten Rückenlehnenaufnahme in einem Zustand befestigbar ist, in dem das Sitzelement an der ersten Rückenlehnenaufnahme befestigt ist.

Diese Ausgestaltung ermöglicht, dass das Sitzelement in Abhängigkeit der Position des Rückenlehnenelements an der Sitzhalterung befestigbar ist. Mit anderen Worten, die Ausrichtung des Sitzelements kann entsprechend der Ausrichtung des Rückenlehnenelements angepasst werden, was den Komfort für Passagiere erhöht. Indem zur Befestigung des Sitzelements an der Sitzhalterung die erste und die zweite Rückenlehnenaufnahme vorgesehen und eingerichtet sind, kann die Anzahl von in der Passagiersitzanordnung vorgesehenen Befestigungsmitteln reduziert und so ein platzsparendes und gewichtsoptimiertes Design der Passagiersitzanordnung sichergestellt werden.

Im Speziellen kann das Sitzelement wenigstens ein zu dem zweiten Rastelement komplementäres drittes Rastelement aufweisen, das dazu eingerichtet ist, lösbar mit wenigstens einem der in der ersten und der zweiten Rückenlehnenaufnahme ausgebildeten zweiten Rastelemente zu verrasten, um das Sitzelement lastübertragend an der Sitzhalterung in seiner ersten oder zweiten Position zu befestigen. Das wenigstens eine dritte Rastelement kann an wenigstens einer Verbindungsstrebe des Sitzelements ausgebildet sein, die in die wenigstens eine Aufnahmeöffnung der ersten oder der zweiten Rückenlehnenaufnahme einschiebbar ist, um das dritte Rastelement mit einem der zweiten Rastelemente zu verrasten.

Weiterhin kann das Sitzelement wenigstens eine Aussparung aufweisen, insbesondere in Form einer Durchgangsöffnung, in der in einem installierten Zustand des Rückenlehnenelements und des Sitzelements an der Sitzhalterung die erste oder zweite Rückenlehnenaufnahme und/oder das Rückenlehnenelement, insbesondere die wenigstens eine Verbindungsstrebe des Rückenlehnenelements, abschnittsweise aufgenommen sind/ist.

Alternativ kann das Sitzelement fest an der Sitzhalterung befestigt sein. Mit anderen Worten, die Passagiersitzanordnung kann derart ausgebildet sein, dass ein Bewegen des Rückenlehnenelements von der ersten in die zweite Position und umgekehrt keinen Umbau des Sitzelements bedingt. Hierbei kann das Sitzelement im Bereich der ersten Rückenlehnenaufnahme mit wenigstens einer ersten Aussparung versehen sein, in der in einem installierten Zustand des Rückenlehnenelements an der ersten Rückenlehnenaufnahme die erste Rückenlehnenaufnahme und/oder das Rückenlehnenelement, insbesondere die wenigstens eine Verbindungsstrebe des Rückenlehnenelements, abschnittsweise aufgenommen sind/ist. Weiterhin kann das Sitzelement im Bereich der zweiten Rückenlehnenaufnahme mit wenigstens einer zweiten Aussparung versehen sein, in der in einem installierten Zustand des Rückenlehnenelements an der zweiten Rückenlehnenaufnahme die zweite Rückenlehnenaufnahme und/oder das Rückenlehnenelement, insbesondere die wenigstens eine Verbindungsstrebe des Rückenlehnenelements, abschnittsweise aufgenommen sind/ist.

In einer Weiterentwicklung kann die Passagiersitzanordnung wenigstens ein Armlehnenelement umfassen, das lösbar und lastübertragend an dem Rückenlehnenelement und der Sitzhalterung befestigbar ist. Diese Ausgestaltung ermöglicht, dass ein Teil der im Betrieb auf das Rückenlehnenelement wirkenden Kräfte über das Armlehnenelement an die Sitzhalterung übertragen wird. So kann insbesondere ein auf eine Verbindungsstelle zwischen der Sitzhalterung und dem Rückenlehnenelement wirkendes Drehmoment verringert und ein belastungsgerechtes Design erreicht werden.

Genauer kann das Armlehnenelement ein erstes Verbindungselement umfassen, das dazu eingerichtet ist, lösbar mit einem an dem Rückenlehnenelement angebrachten komplementären zweiten Verbindungselement zu verrasten, um das Armlehnenelement lastübertragend an dem Rückenlehnenelement zu befestigen. Insbesondere können das erste und das zweite Verbindungselement derart zusammenwirken und ausgebildet sein, dass in einem aneinander verrasteten Zustand eine rotatorische Bewegung des Armlehnenelements relativ zu dem Rückenlehnenelement gesperrt ist und eine translatorische Bewegung des Armlehnenelements relativ zu dem Rückenlehnenelement in Richtung einer Freigabeposition des Armlehnenelements freigegeben ist, um das erste Verbindungselement von dem zweiten Verbindungselement zu lösen. Mit anderen Worten, unter einer Freigabeposition des Armlehnenelements wird vorliegend eine Position verstanden, in der das Armlehnenelement von dem Rückenlehnenelement und der Sitzhalterung gelöst ist. Das erste und das zweite Verbindungselement sind vorzugsweise derart bereitgestellt, dass in einem aneinander verrasteten Zustand das Armlehnenelement in einem an der Sitzhalterung montierten Zustand in einer von der Sitzhalterung abgewandten Richtung bewegbar ist, um seine Freigabeposition einzunehmen.

Alternativ oder zusätzlich kann das Armlehnenelement ein drittes Verbindungselement umfassen, das dazu eingerichtet ist, lösbar mit einem an der Sitzhalterung angebrachten vierten Verbindungselement zu verrasten, um das Armlehnenelement lastübertragend an der Sitzhalterung zu befestigen. Insbesondere können das dritte Verbindungselement und das vierte Verbindungselement in einem aneinander verrasteten Zustand derart zusammenwirken und ausgebildet sein, dass eine rotatorische Bewegung des Armlehnenelements relativ zu der Sitzhalterung gesperrt ist und eine translatorische Bewegung des Armlehnenelements relativ zu der Sitzhalterung in Richtung der Freigabeposition des Armlehnenelements freigegeben ist, um das dritte Verbindungselement von dem vierten Verbindungselement zu lösen.

Ferner kann das Armlehnenelement einen weiteren Sperrmechanismus umfassen, das dazu eingerichtet sein kann, in einem an dem Rückenlehnenelement und der Sitzhalterung befestigten Zustand des Armlehnenelements eine Bewegung des Armlehnenelements in Richtung seiner Freigabeposition, in der das erste Verbindungselement von dem zweiten Verbindungselement und das dritte Verbindungselement von dem vierten Verbindungselement gelöst ist, zu sperren. Mit anderen Worten, der weitere Sperrmechanismus verriegelt das Armlehnenelement in der an dem Rückenlehnenelement und der Sitzhalterung befestigten Position. Auf diese Weise kann ein unerwünschtes Lösen des Armlehnenelements von dem Rückenlehnenelement und der Sitzhalterung verhindert werden.

Alternativ oder zusätzlich kann das Armlehnenelement eine weitere Federeinheit umfassen, die das Armlehnenelement in einem an dem Rückenlehnenelement und/oder der Sitzhalterung installierten Zustand in Richtung seiner Freigabeposition belastet. Auf diese Weise kann die Handhabung des Armlehnenelements für einen Benutzer beim Rekonfigurieren der Passagiersitzanordnung vereinfacht werden.

Ein Passagiersitzsystem umfasst wenigstens eine Passagiersitzanordnung mit den voranstehenden Merkmalen. Die Passagiersitzanordnung ist über den Stützrahmen mit einer Struktur des Luftfahrzeugs, insbesondere einer Sitzschiene des Luftfahrzeugs zum Verankern von Passagiersitzen in einer Passagierkabine, lastübertragend verbindbar. In einer Weiterentwicklung kann die Passagiersitzanordnung mit der Struktur des Luftfahrzeugs in einer Längsrichtung des Luftfahrzeugs vor oder hinter einer in dem Luftfahrzeug installierten weiteren Passagiersitzanordnung verbindbar sein. Insbesondere kann die Passagiersitzanordnung in Längsrichtung des Luftfahrzeugs in einer ersten Position und in einer zweiten Position mit der Struktur des Luftfahrzeugs verbindbar sein, wobei ein Abstand zwischen der Passagiersitzanordnung und der weiteren Passagiersitzanordnung in der zweiten Position größer als in der ersten Position der Passagiersitzanordnung sein kann. Auf diese Weise kann ein Abstand zwischen der Passagiersitzanordnung und einer weiteren Passagiersitzanordnung je nach Konfiguration eingestellt und dadurch der Komfort für Passagiere erhöht werde.

Das Passagiersitzsystem umfasst ferner eine Tischanordnung, die in einem in dem Luftfahrzeug installierten Zustand der Passagiersitzanordnung in der Längsrichtung des Luftfahrzeugs vor oder hinter der Passagiersitzanordnung mit der Struktur des Luftfahrzeugs, insbesondere der Sitzschiene, lastübertragend verbindbar ist. Genauer kann die Tischanordnung dazu eingerichtet sein, mit der Struktur des Luftfahrzeugs zwischen der Passagiersitzanordnung und der weiteren Passagiersitzanordnung lastübertragend verbindbar zu sein.

Ein Verfahren zur Installation eines Passagiersitzsystems in einem Luftfahrzeug umfasst einen Schritt des Installierens einer Passagiersitzanordnung mit den voranstehenden Merkmalen in dem Luftfahrzeug durch lastübertragendes Verbinden des Stützrahmens der Passagiersitzanordnung mit einer Struktur des Luftfahrzeugs. Die Installation kann derart erfolgen, dass die Passagiersitzanordnung in einer Längsrichtung des Luftfahrzeugs hinter einer weiteren Passagiersitzanordnung angeordnet ist. Weiterhin erfolgen ein Lösen des Rückenlehnenelements von der ersten Rückenlehnenaufnahme der Sitzhalterung und ein Befestigen des Rückenlehnenelements an der zweiten Rückenlehnenaufnahme der Sitzhalterung. Ferner umfasst das Verfahren einen Schritt des Installierens einer Tischanordnung in der Längsrichtung des Luftfahrzeugs vor oder hinter der Passagiersitzanordnung, insbesondere zwischen der Passagiersitzanordnung und der weiteren Passagiersitzanordnung, in dem Luftfahrzeug durch lastübertragendes Verbinden der Tischanordnung mit der Struktur des Luftfahrzeugs.

Bevorzugte Ausführungsbeispiele der Erfindung werden im Folgenden anhand der beigefügten schematischen Zeichnungen näher erläutert, wobei
- Figur 1: eine perspektivische Ansicht auf eine Passagiersitzanordnung in einem ersten Zustand,
- Figur 2: die in Figur 1 gezeigte Passagiersitzanordnung in einem zweiten Zustand,
- Figur 3: die in Figuren 1 und 2 gezeigte Passagiersitzanordnung in einem dritten Zustand,
- Figur 4: eine vergrößerte Ansicht auf eine Sitzhalterung und ein Rückenlehnenelement der Passagiersitzanordnung,
- Figur 5: eine vergrößerte Querschnittsansicht auf die Sitzhalterung, das Rückenlehnenelement und ein Sitzelement der Passagiersitzanordnung,

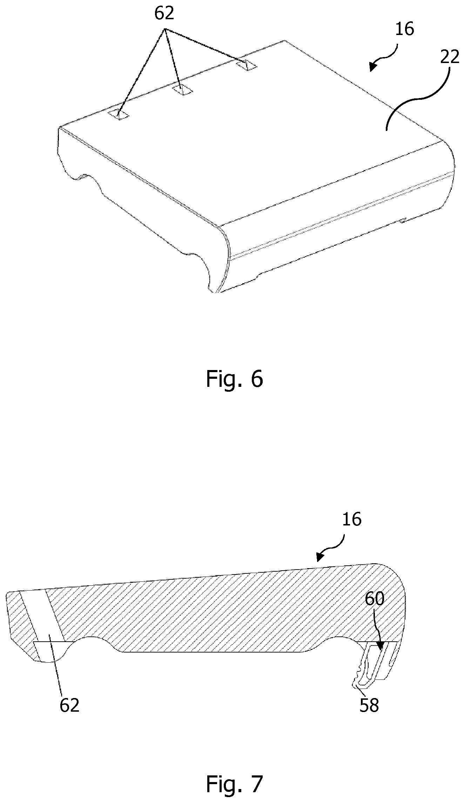

- Figuren 6 und 7: das Sitzelement der Passagiersitzanordnung in einer perspektivischen Ansicht und einer Querschnittsansicht,
- Figuren 8 und 9: eine Querschnittsansicht eines Armlehnenelements der Passagiersitzanordnung in verschiedenen Zuständen,
- Figur 10: eine vergrößerte Ansicht auf das Rückenlehnenelement der Passagiersitzanordnung,
- Figuren 11a-l: ein Verfahren zum Rekonfigurieren der in Figuren 1 bis 10 gezeigten Passagiersitzanordnung,
- Figuren 12a-d: eine weitere Ausführungsform einer Passagiersitzanordnung und ein Verfahren zum Rekonfigurieren derselben,
- Figur 13: eine vergrößerte Ansicht auf ein Sitzelement der in Figuren 12a-d gezeigten Passagiersitzanordnung,
- Figuren 14 bis 16: verschiedene Konfigurationen der Passagiersitzanordnung,
- Figuren 17 bis 20: einen Flugzeugkabinenbereich mit einer Passagiersitzanordnung unterschiedlicher Konfigurationen
- Figuren 21a-h: ein Passagiersitzsystem und ein Verfahren zur Installation desselben, und
- Figur 22: eine Seitenansicht auf das in Figur 21h gezeigte Passagiersitzsystem zeigen.

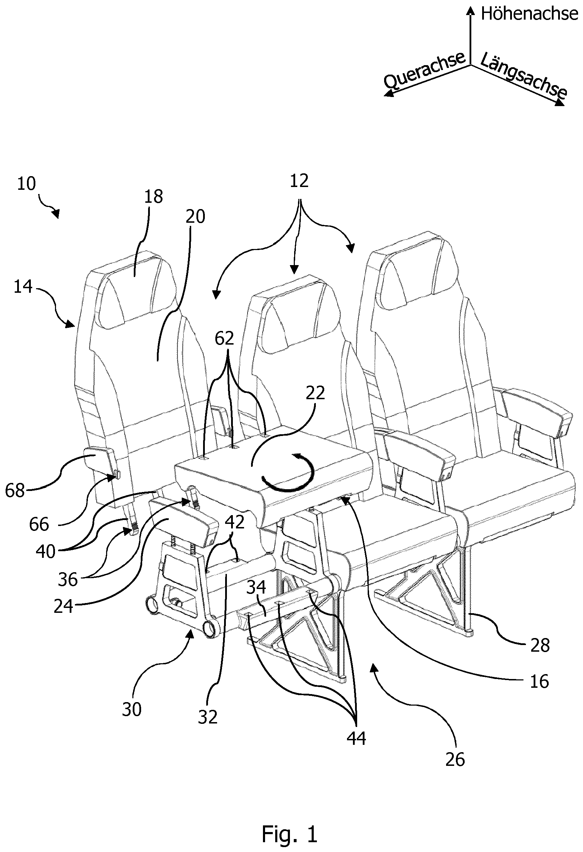

Figur 1 bis 3 zeigen eine Passagiersitzanordnung 10 in einem in einer Passagierkabine eines Luftfahrzeugs installierten Zustand, die eine Sitzreihe in der Passagierkabine bildet. Die Passagiersitzanordnung 10 ist zwischen hier nicht gezeigten weiteren Sitzreihen in der Passagierkabine angeordnet. Die Passagiersitzanordnung 10 umfasst drei nebeneinander angeordnete Sitzeinheiten 12, die jeweils einen Sitzplatz für einen Passagier bilden.

Die Sitzeinheiten 12 umfassen jeweils ein Rückenlehnenelement 14 und ein Sitzelement 16. Genauer umfasst das Rückenlehnenelement 14 eine Kopfstütze 18 und eine Rückenlehnenfläche 20 und ist vorzugsweise relativ zu dem Sitzelement 16 zwischen einer aufrechten Position und einer zurückgelehnten Position verschwenkbar. Hierzu kann das Rückenlehnenelement 14 einen hier nicht gezeigten Schwenkmechanismus haben, wodurch das Rückenlehnenelement 14 relativ zu dem Sitzelement 16 zumindest abschnittsweise verschwenkbar sein kann. Das Sitzelement 16 umfasst eine Sitzfläche 22 zur Aufnahme eines Passagiers. Ferner umfasst die Passagiersitzanordnung mehrere Armlehnenelemente 24, wobei jeder Sitzeinheit 12 zwei Armlehnenelemente 24 zugeordnet sind. In dem hier gezeigten Ausführungsbeispiel umfasst die Passagiersitzanordnung 10 vier Armlehnenelemente 24, wobei zwischen den Sitzeinheiten 12 angeordnete Armlehnenelemente 24 jeweils zwei Sitzeinheiten 12 zugeordnet sind.

Die Passagiersitzanordnung 10 umfasst ferner einen die Sitzeinheiten 12 tragenden Stützrahmen 26, der über zwei Stützfüße 28 mit einer hier nicht gezeigten Sitzschiene des Luftfahrzeugs lastübertragend verbunden ist. Der Stützrahmen 26 umfasst drei Sitzhalterungen 30, die jeweils einer Sitzeinheit 12 zugeordnet und dazu eingerichtet sind, diese an dem Stützrahmen 26 lastübertragend zu befestigen.

Im Folgenden wird der Aufbau der Passagiersitzanordnung 10 mit Bezug auf eine der drei Sitzeinheiten 12 und eine der drei Sitzhalterungen 30 genauer spezifiziert. Die anderen Sitzeinheiten 12 und die anderen Sitzhalterungen 30 sind dabei entsprechend der nachstehend beschriebenen Sitzeinheit 12 und Sitzhalterung 30 ausgebildet.

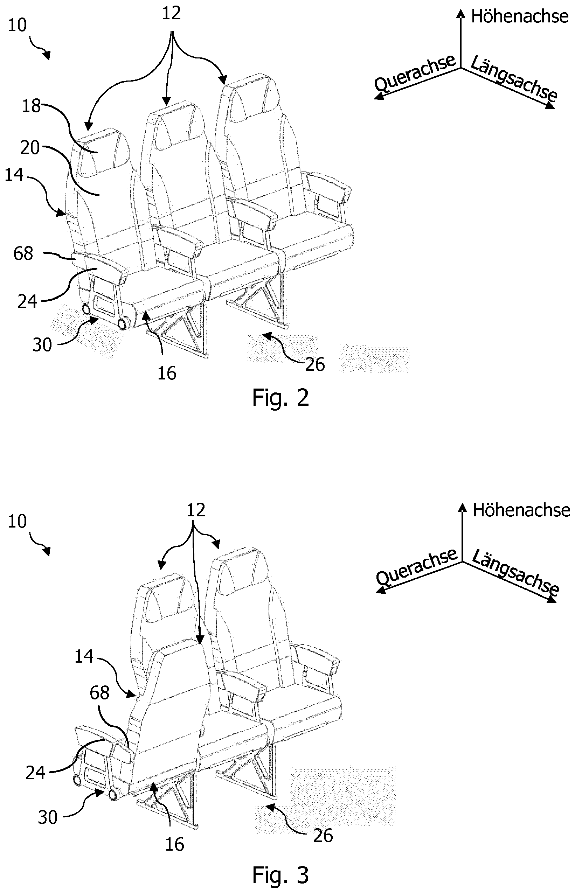

Die Sitzhalterung 30 umfasst eine erste Rückenlehnenaufnahme 32, an der das Rückenlehnenelement 14 der Sitzeinheit 12 lösbar und lastübertragend an der Sitzhalterung 30 in einer ersten Position befestigbar ist. Ein in dieser ersten Position befestigtes Rückenlehnelement 32 ist in Figur 2 gezeigt. Ferner umfasst die Sitzhalterung 30 eine zweite Rückenlehnenaufnahme 34, an der das Rückenlehnenelement 14 lösbar und lastübertragend an der Sitzhalterung 30 in einer zweiten Position befestigbar ist, wie in Figur 3 gezeigt.

Das Rückenlehnenelement 14 ist in einem an der ersten Rückenlehnenaufnahme 32 befestigten Zustand relativ zu einem an der zweiten Rückenlehnenaufnahme 34 befestigten Zustand relativ zu einer Längsachse des Luftfahrzeugs verschwenkt. Im Speziellen ist das Rückenlehnenelement 14 in dem an der ersten Rückenlehnenaufnahme 32 befestigten Zustand relativ zu dem an der zweiten Rückenlehnenaufnahme 34 befestigten Zustand um 180° um eine Achse parallel zu einer Höhenachse des Luftfahrzeugs verschwenkt. In einer alternativen Ausführungsform kann das Rückenlehnenelement 14 in dem an der ersten Rückenlehnenaufnahme 32 befestigten Zustand relativ zu dem an der zweiten Rückenlehnenaufnahme 34 befestigten Zustand um im Wesentlichen 90° um die Achse parallel zur Höhenachse des Luftfahrzeugs verschwenkt sein.

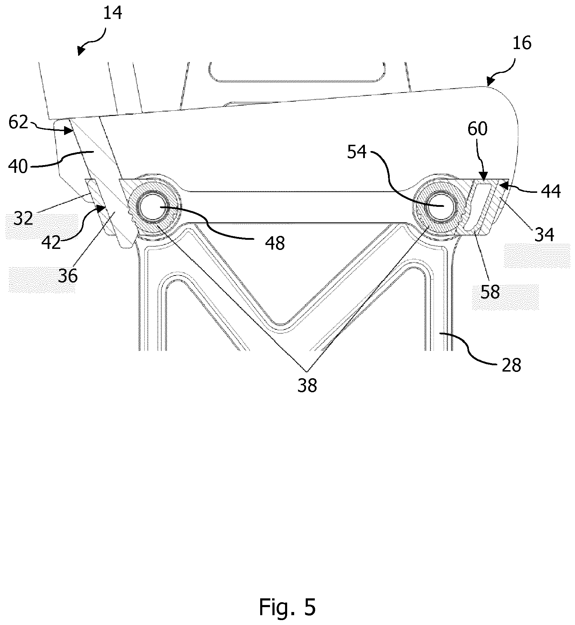

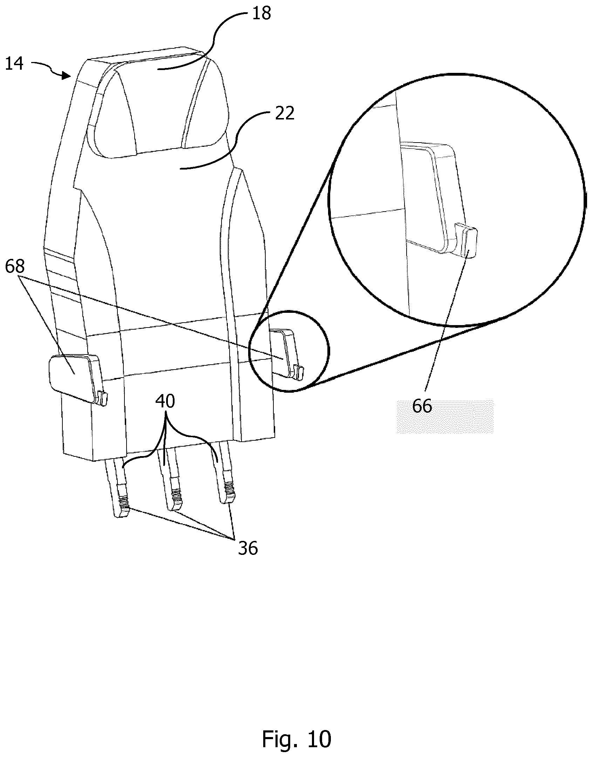

Zur Bereitstellung einer lösbaren und lastübertragenden Verbindung zwischen dem Rückenlehnenelement 14 und der Sitzhalterung 30 umfasst das Rückenlehnenelement 14 drei erste Rastelemente 36, wie in Figuren 1 und 10 gezeigt. Die Rastelemente 36 sind dazu eingerichtet, lösbar mit dazu komplementären, jeweils in der ersten und der zweiten Rückenlehnenaufnahme 32, 34 ausgebildeten zweiten Rastelementen 38, wie in Figur 5 gezeigt, zu verrasten, um das Rückenlehnenelement 14 lastübertragend an der Sitzhalterung 30 in der ersten oder zweiten Position zu befestigen. Mit anderen Worten, sowohl die erste Rückenlehnenaufnahme 32 als auch die zweite Rückenlehnenaufnahme 34 umfassen jeweils drei zu den ersten Rastelementen 36, komplementäre zweite Rastelemente 38. Die ersten Rastelemente 36 sind an jeweils einer Verbindungsstrebe 40 des Rückenlehnenelements 14 ausgebildet. Wie in Figur 5 gezeigt, weisen die ersten Rastelemente 36 mehrere übereinander angeordnete, sich über eine Breite der jeweiligen Verbindungsstrebe 40 erstreckende Rastzähne auf, die mit dazu komplementären Rastzähnen der zweiten Rastelemente 38 in Eingriff bringbar sind.

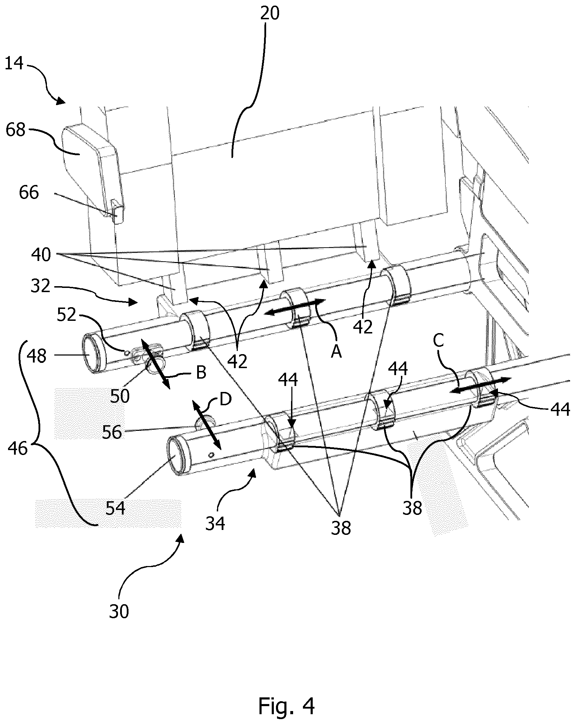

Figur 4 zeigt eine vergrößerte Ansicht auf die Sitzhalterung 30, bei der ein Gehäuse der Sitzhalterung 30 transparent dargestellt ist. Wie in Figur 4 gezeigt, sind die erste und die zweite Rückenlehnenaufnahme 32, 34 jeweils mit drei Aufnahmeöffnungen 42, 44 versehen, in denen jeweils ein zweites Rastelement 38 angeordnet ist. Die Aufnahmeöffnungen 42, 44 sind derart ausgebildet, dass in diese jeweils eine mit dem ersten Rastelement 36 ausgebildete Verbindungsstrebe 40 des Rückenlehnenelements 14 einschiebbar ist, um die ersten Rastelemente 36 mit den zweiten Rastelementen 38 der ersten Rückenlehnenaufnahme 32 oder der zweiten Rückenlehnenaufnahme 34 zu verrasten.

Die Passagiersitzanordnung 10 umfasst ferner einen das Rückenlehnenelement 14 mit der ersten oder der zweiten Rückenlehnenaufnahme 32, 34 verriegelnden Verriegelungsmechanismus 46. Der Verriegelungsmechanismus 46 bewirkt, dass eine lastübertragende Verbindung zwischen dem Rückenlehnenelement 14 und der Sitzhalterung 30 entweder aufrechterhalten oder gelöst wird. Genauer ist der Verriegelungsmechanismus 46 dazu eingerichtet, die zweiten Rastelemente 38 der ersten und der zweiten Rückenlehnenaufnahme 32, 34 zwischen einer Verrieglungsposition, in der die zweiten Rastelemente 38 der ersten und der zweiten Rückenlehnenaufnahme 32, 34 mit den ersten Rastelementen 36 verrastbar sind, und einer Freigabeposition, in der eine Bewegung der ersten Rastelemente 36 relativ zu den zweiten Rastelementen 38 der ersten und der zweiten Rückenlehnenaufnahme 32, 34 freigegeben ist, zu bewegen.

Die erste Rückenlehnenaufnahme 32 weist einen in der Sitzhalterung 30 bewegbar gelagerten ersten Verriegelungsbolzen 48 auf, der einen Teil des Verrieglungsmechanismus 46 bildet. An dem ersten Verriegelungsbolzen 48 sind die zweiten Rastelemente 38 der ersten Rückenlehnenaufnahme 32 in Form von den ersten Verriegelungsbolzen 48 umschließenden Ringscheiben bereitgestellt, die in Längsrichtung des ersten Verriegelungsbolzens 48 in regelmäßigen Abständen daran angeordnet sind. Die mehreren Rastzähne der zweiten Rastelemente 38 sind dabei an einer Mantelfläche der Ringscheiben ausgebildet. Wie durch den Pfeil A in Figur 4 angedeutet, ist der erste Verriegelungsbolzen 48 entlang seiner Längsrichtung bewegbar, d.h. entlang einer Querrichtung des Luftfahrzeugs, um die zweiten Rastelemente 38 der ersten Rückenlehnenaufnahme 32 zwischen ihrer Verriegelungsposition und Freigabeposition zu bewegen.

Der Verriegelungsmechanismus 46 umfasst ferner ein die zweiten Rastelemente 38 der ersten Rückenlehnenaufnahme 32 in ihrer Verriegelungsposition und Sperrposition sperrendes erstes Sperrelement 50, das einen Teil eines Sperrmechanismus bildet. Das erste Sperrelement 50 ist zwischen einer Sperrposition, in der eine Bewegung der zweiten Rastelemente 38 der ersten Rückenlehnenaufnahme 32 zwischen ihrer Verriegelungsposition und Freigabeposition gesperrt ist, und einer Freigabeposition, in der eine Bewegung der zweiten Rastelemente 38 der ersten Rückenlehnenaufnahme 32 zwischen ihrer Verriegelungsposition und Freigabeposition freigegeben ist, bewegbar, wie durch den Pfeil B in Figur 4 angedeutet. Hierzu umfasst der erste Verriegelungsbolzen 48 zwei Verriegelungselemente in Form von zwei voneinander in Längsrichtung des ersten Verbindungsbolzens 48 beabstandeten Aussparungen 52 an einer Mantelfläche des ersten Verbindungsbolzens 48. Entsprechend weist das erste Sperrelement 50 einen mit den Aussparungen 52 in Eingriff bringbaren Verriegelungsstift auf, um in seiner Sperrposition den ersten Verbindungsbolzen 48 und damit die daran angeordneten zweiten Rastelemente 38 der ersten Rückenlehnenaufnahme 32 in ihrer Verriegelungsposition oder Freigabeposition zu sperren. Das erste Sperrelement 50 umfasst weiterhin eine das erste Sperrelement 50 in Richtung seiner Sperrposition belastende erste Feder.

Entsprechend weist die zweite Rückenlehnenaufnahme 34 einen in der Sitzhalterung 30 bewegbar gelagerten zweiten Verriegelungsbolzen 54 auf, der einen weiteren Teil des Verrieglungsmechanismus 46 bildet. An dem zweiten Verriegelungsbolzen 54 sind die zweiten Rastelemente 38 der zweiten Rückenlehnenaufnahme 34 in Form von den zweiten Verriegelungsbolzen 54 umschließenden Ringscheiben bereitgestellt, die in Längsrichtung des zweiten Verriegelungsbolzens 54 in regelmäßigen Abständen daran angeordnet sind. Die mehreren Rastzähne der zweiten Rastelemente 38 sind dabei an einer Mantelfläche der Ringscheiben ausgebildet. Wie durch den Pfeil C in Figur 4 angedeutet, ist der zweite Verriegelungsbolzen 54 entlang seiner Längsrichtung bewegbar, um die zweiten Rastelemente 38 der zweiten Rückenlehnenaufnahme 34 zwischen ihrer Verriegelungsposition und Freigabeposition zu bewegen.

Der Verriegelungsmechanismus 46 umfasst weiterhin ein die zweiten Rastelemente 38 der zweiten Rückenlehnenaufnahme 34 in ihrer Verriegelungsposition und Sperrposition sperrendes zweites Sperrelement 56, das einen weiteren Teil des Sperrmechanismus bildet. Das zweite Sperrelement 56 ist zwischen einer Sperrposition, in der eine Bewegung der zweiten Rastelemente 38 der zweiten Rückenlehnenaufnahme 34 zwischen ihrer Verriegelungsposition und Freigabeposition gesperrt ist, und einer Freigabeposition, in der eine Bewegung der zweiten Rastelemente 38 der zweiten Rückenlehnenaufnahme 34 zwischen ihrer Verriegelungsposition und Freigabeposition freigegeben ist, bewegbar, wie durch den Pfeil D in Figur 4 angedeutet. Hierzu ist der zweite Verriegelungsbolzen 54 entsprechend dem ersten Verriegelungsbolzen 48 und das zweite Sperrelement 56 entsprechend dem ersten Sperrelement 50 ausgebildet.

In einer Weiterentwicklung kann der Verriegelungsmechanismus 46 wenigstens eine Federeinheit umfassen, die den ersten und den zweiten Verriegelungsbolzen 48, 54 und damit die daran angeordneten zweiten Rastelemente 38 der ersten und der zweiten Rückenlehnenaufnahme 32, 34 in Richtung ihrer Verriegelungsposition belastet.

Wie in Figuren 1 und 5 gezeigt, ist das Sitzelement 16 lösbar und lastübertragend an der ersten Rückenlehnenaufnahme 32 in einer ersten Position oder an der zweiten Rückenlehnenaufnahme 34 in einer zweiten Position befestigbar. Das Sitzelement 16 ist dabei in einem an der ersten Rückenlehnenaufnahme 32 befestigten Zustand relativ zu einem an der zweiten Rückenlehnenaufnahme 34 befestigten Zustand um 180° um die Achse parallel zur Höhenachse des Luftfahrzeugs verschwenkt angeordnet. Alternativ kann das Sitzelement 16 in dem an der ersten Rückenlehnenaufnahme 32 installierten Zustand relativ zu dem an der zweiten Rückenlehnenaufnahme 34 installierten Zustand um 90° um die Achse parallel zur Höhenachse des Luftfahrzeugs verschwenkt angeordnet sein.

Das Sitzelement 16 weist drei zu den zweiten Rastelementen 38 komplementäre dritte Rastelemente 58 auf, die dazu eingerichtet sind, lösbar und lastübertragend mit den zweiten Rastelementen 38 der ersten oder zweiten Rückenlehnenaufnahme 32, 34 zu verrasten, um das Sitzelement 16 lastübertragend an der Sitzhalterung 30 in seiner ersten oder zweiten Position zu befestigen. Die dritten Rastelemente 58 sind jeweils an einer von drei Verbindungsstreben 60 des Sitzelements 16 ausgebildet. Die Verbindungsstreben 60 sind an einer der Sitzfläche 22 entgegengesetzt angeordneten Unterseite des Sitzelements 16 in einem Randbereich des Sitzelements 16 angeordnet. Genauer sind die Verbindungsstreben 60 derart ausgebildet, dass diese in die entsprechenden Aufnahmeöffnungen 42, 44 der ersten und der zweiten Rückenlehnenaufnahme 32, 34 einschiebbar sind, um die dritten Rastelemente 58 mit den zweiten Rastelementen 38 der ersten oder der zweiten Rückenlehnenaufnahme 32, 34 zu verrasten.

In einem zu den Verbindungsstreben 60 entgegengesetzt angeordneten Randbereich des Sitzelements 16 ist dieses mit wenigstens drei Aussparungen 62 in Form von Durchgangsöffnungen 62 versehen. In einem installierten Zustand des Rückenlehnenelements 14 und des Sitzelements 16 an der Sitzhalterung 30 sind die Verbindungsstreben 40 des Rückenlehnenelement 14 zumindest abschnittsweise in den Durchgangsöffnungen 62 des Sitzelements 16 aufgenommen, wie in Figur 5 gezeigt.

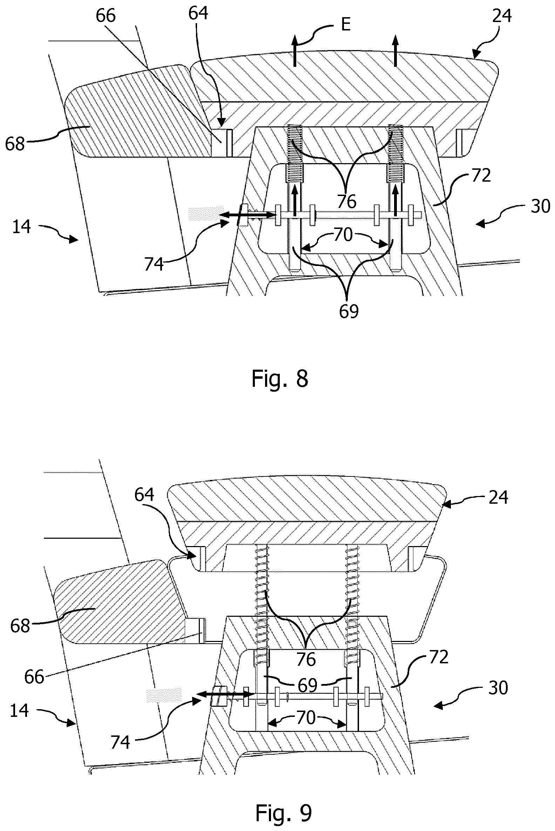

Im Folgenden wird unter Bezugnahme auf Figuren 8 bis 10 die Ausgestaltung der Armlehnenelemente 24 genauer spezifiziert. Die Armlehnenelemente 24 sind derart ausgestaltet und dazu eingerichtet, lösbar und lastübertragend sowohl an dem Rückenlehnenelement 14 als auch an der Sitzhalterung 30 befestigt zu werden. Genauer umfasst jedes der Armlehnenelemente 24 ein erstes Verbindungselement 64, das dazu eingerichtet ist, lösbar mit einem an dem Rückenlehnenelement 14 angebrachten komplementären zweiten Verbindungselement 66 zu verrasten, um das Armlehnenelement 24 lastübertragend an dem Rückenlehnenelement zu befestigen. Wie in Figur 10 gezeigt, ist das zweite Verbindungselement 66 in Form eines Stegs bzw. Formsteins mit T-förmiger Querschnittsform ausgebildet, der mit dem ersten Verbindungselement 64 in Form einer dazu komplementären T-förmigen Nut, d.h. einer Nut mit einer im Querschnitt T-förmigen Aussparung, verrastbar ist. Das zweite Verbindungselement 66 ist an einer Armlehnenaufnahme 68 des Rückenlehnenelements 14 angebracht. In einem aneinander verrasteten Zustand wirken das erste Verbindungselement 64 und das zweite Verbindungselement 66 derart zusammen, dass eine rotatorische Bewegung des Armlehnenelements 24 relativ zu dem Rückenlehnenelement 14 gesperrt ist und eine translatorische Bewegung des Armlehnenelements 24 relativ zu dem Rückenlehnenelement 14 in Richtung einer Freigabeposition des Armlehnenelements 24 freigegeben ist. Durch Bewegen des Armlehnenelements 24 in Richtung seiner Freigabeposition werden das erste Verbindungselement 64 und das zweite Verbindungselement 66 voneinander gelöst. Die Richtung der Freigabeposition ist in Figur 8 durch die Pfeile E angedeutet. Vorliegend ist das Armlehnenelement 24 in einem ineinander verrasteten Zustand des ersten und des zweiten Verbindungselements 64, 66 in einer von der Sitzhalterung 30 abgewandten Richtung bewegbar, um in seine Freigabeposition zu gelangen.

Das Armlehnenelement 24 umfasst ferner ein drittes Verbindungselement 69, das dazu eingerichtet ist, lösbar mit einem an der Sitzhalterung angebrachten vierten Verbindungselement 70 zu verrasten, um das Armlehnenelement 24 lastübertragend an der Sitzhalterung 30 zu befestigen. Das dritte Verbindungselement 69 und das vierte Verbindungselement 70 wirken in einem aneinander verrasteten Zustand derart zusammen, dass eine rotatorische Bewegung des Armlehnenelements 24 relativ zu der Sitzhalterung 30 gesperrt ist und eine translatorische Bewegung des Armlehnenelements 24 relativ zu der Sitzhalterung 30 in Richtung der Freigabeposition des Armlehnenelements 24 freigegeben ist. Durch Bewegen des Armlehnenelements 24 in Richtung seiner Freigabeposition erfolgt ein Lösen des dritten Verbindungselements 69 von dem vierten Verbindungselement 70. Im Speziellen ist das dritte Verbindungselement 69 in Form von zwei Verbindungsbolzen bereitgestellt, die in dazu komplementäre, in einer Armlehnenstütze 72 der Sitzhalterung 30 ausgebildete Aufnahmeöffnungen, die das vierte Verbindungselement 70 bilden, einschiebbar sind.

Das Armlehenelement 24 umfasst ferner einen weiteren Sperrmechanismus 74, der in einem an dem Rückenlehnenelement 14 und der Sitzhalterung 30 befestigten Zustand des Armlehnenelements 24 eine Bewegung des Armlehnenelements 24 in Richtung seiner Freigabeposition sperrt. Mit anderen Worten, der weitere Sperrmechanismus 74 verriegelt das Armlehnenelement 24 in der an dem Rückenlehnenelement 14 und der Sitzhalterung 30 befestigten Position. Weiterhin umfasst das Armlehnenelement 24 eine weitere Federeinheit 76, die das Armlehnenelement 24 in einem an dem Rückenlehnenelement 14 und der Sitzhalterung 30 installierten Zustand in Richtung seiner Freigabeposition belastet. Die weitere Federeinheit 76 ist durch die Verbindungsbolzen des dritten Verbindungselements 69 umschließende Spiralfedern gebildet.

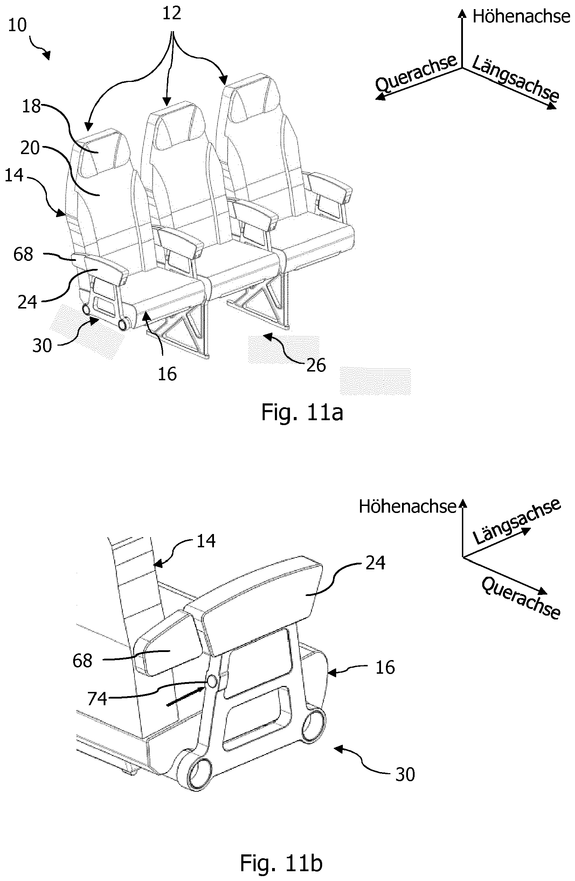

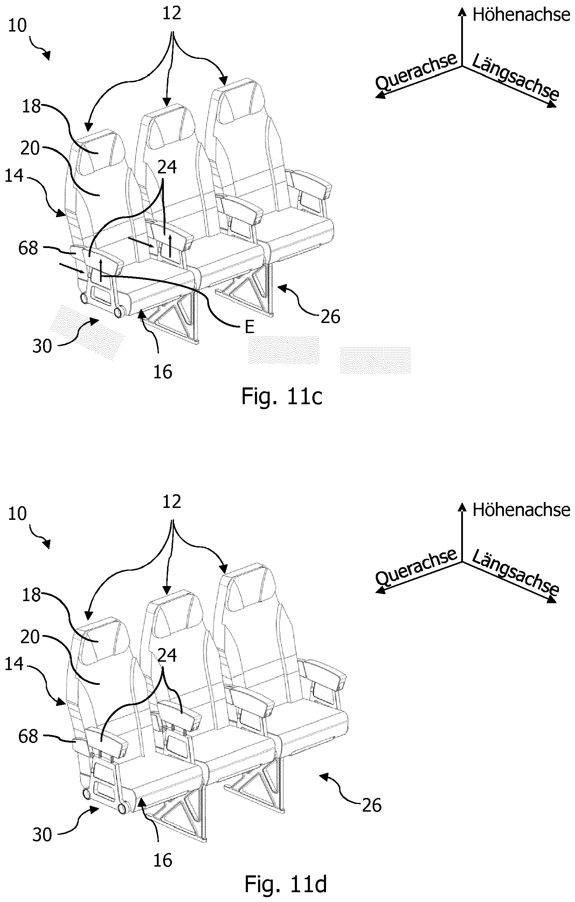

Im Folgenden wird unter Bezugnahme auf Figuren 11a bis 11l ein Verfahren zum Rekonfigurieren der Passagiersitzanordnung 10 spezifiziert. Dies erfolgt exemplarisch am Beispiel einer der drei Sitzeinheiten 12. Figur 11a zeigt die Passagiersitzanordnung 10 in einem ersten Zustand, in dem die einzelnen Sitzeinheiten 12 jeweils in Längsrichtung des Luftfahrzeugs orientiert sind. Die Rückenlehnen- und Armlehnenelemente 14, 24 sind mit der jeweiligen Sitzhalterung 30 fest verbunden. In einem ersten Schritt, wie in Figuren 11b und 11c gezeigt, erfolgt ein Lösen der der Sitzeinheit 30 zugordneten Armlehnenelemente 24. Hierzu wird für jedes zu lösende Armlehnenelement 24 jeweils der weitere Sperrmechanismus 74 betätigt, um die Verriegelung des Armlehnenelements 24 in seiner an der Sitzhalterung 30 befestigten Position zu lösen und so eine Bewegung des Armlehnenelements 24 in Richtung seiner Freigabeposition freizugeben. Entsprechend erfolgt in dem in Figur 11d gezeigten Schritt ein Bewegen der Armlehnenelemente 24 in deren jeweilige Freigabeposition, um diese von dem Rückenlehnenelement 14 und der Sitzhalterung 30 zu lösen.

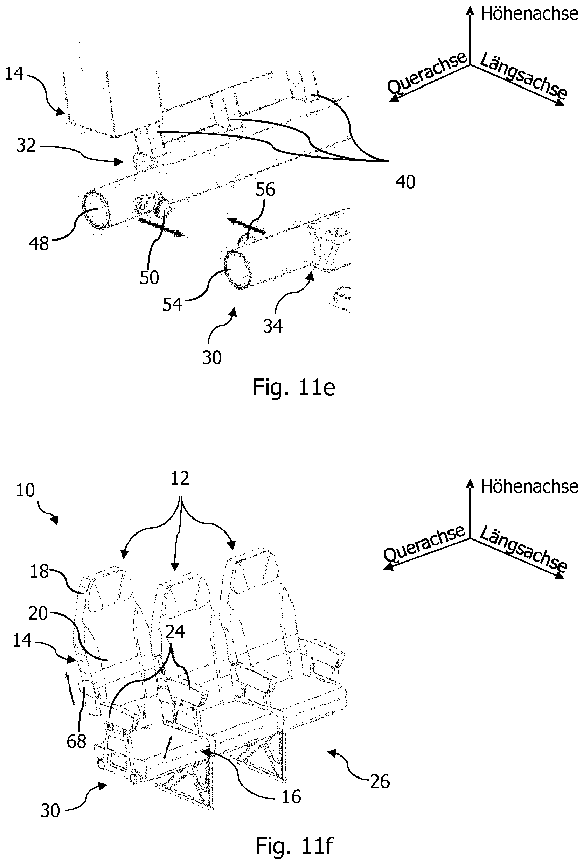

Daraufhin werden das erste und das zweite Sperrelement 50, 56 aus deren Sperrposition in Richtung deren Freigabeposition bewegt, wie in Figur 11e gezeigt, sodass eine Verriegelung des ersten und des zweiten Verbindungsbolzens 48, 54 gelöst ist. In Figur 11e ist aus Gründen der Übersicht das Sitzelement 16 nicht dargestellt. Entsprechend erfolgt in einem nächsten Schritt ein Bewegen des ersten und des zweiten Verriegelungsbolzens 48, 54 in Richtung deren Freigabeposition, um die lastübertragende Verbindung zwischen den zweiten Rastelementen 38 der ersten Rückenlehnenaufnahme 32 und der ersten Rastelemente 36 des Rückenlehnenelements 14 sowie zwischen den zweiten Rastelementen 38 der zweiten Rückenlehnenaufnahme 34 und den dritten Rastelementen 58 des Sitzelements 16 zu lösen.

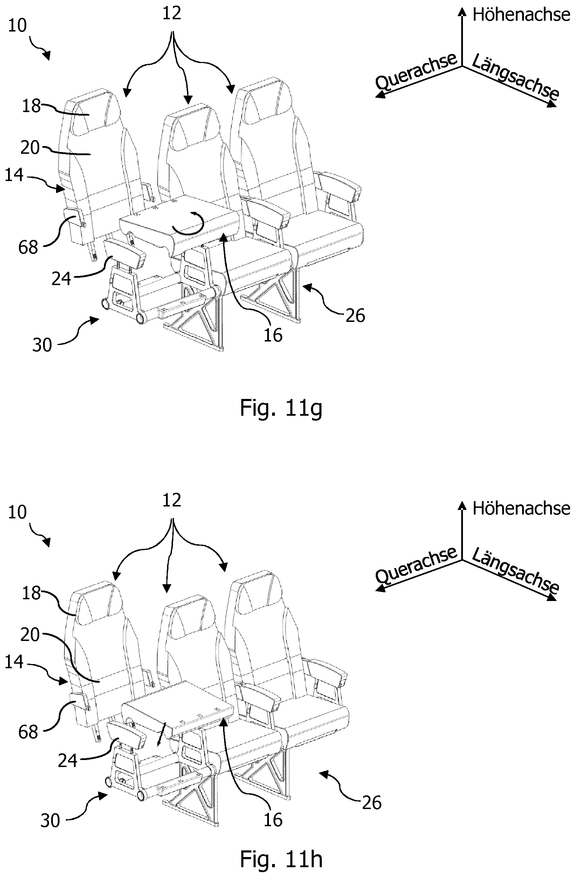

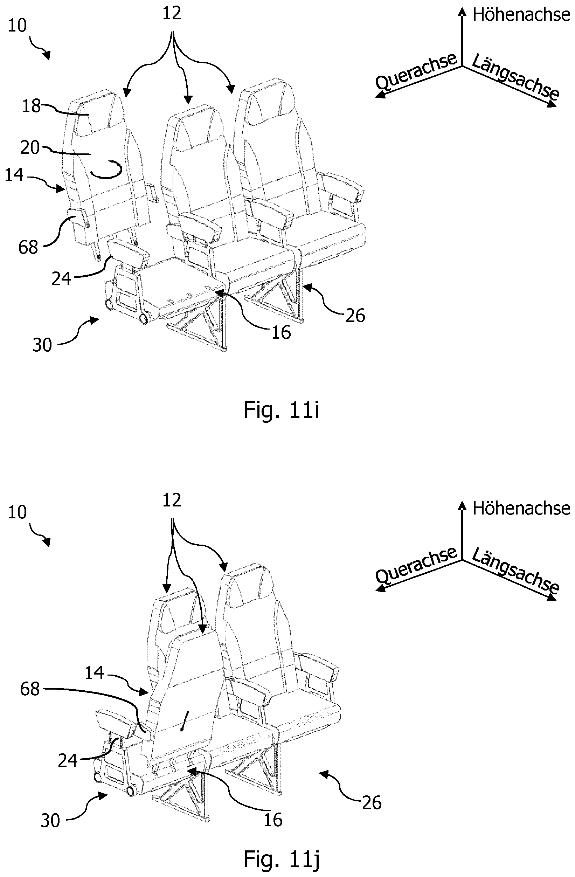

In einem weiteren Schritt erfolgt zunächst ein Bewegen des Rückenlehnenelements 14 in einer von der Sitzhalterung 30 abgewandten Richtung, sodass die die ersten Rastelemente 36 aufweisenden Verbindungsstreben 40 des Rückenlehnenelements 14 aus den Aufnahmeöffnungen 42 der ersten Rückenlehnenaufnahme 32 und den Durchgangsöffnungen 62 des Sitzelements 16 herausgezogen werden, wie in Figur 11f gezeigt. Darauffolgend wird das Sitzelement 16 in die von der Sitzhalterung 30 abgewandte Richtung beweget, sodass die dritten Rastelemente 58 des Sitzelements 16 aus den Aufnahmeöffnungen 44 der zweiten Rückenlehnenaufnahme herausgezogen werden, wie in Fig. 11g gezeigt. Das Sitzelement 16 wird um 180° um die Achse parallel zur Höhenachse des Luftfahrzeugs gewendet und an der ersten Rückenlehnenaufnahme 32 befestigt, indem die dritten Rastelementen 58 in die Aufnahmeöffnungen 42 der ersten Rückenlehnenaufnahme 32 eingeschoben werden, wie in Figuren 11h und 11i gezeigt.

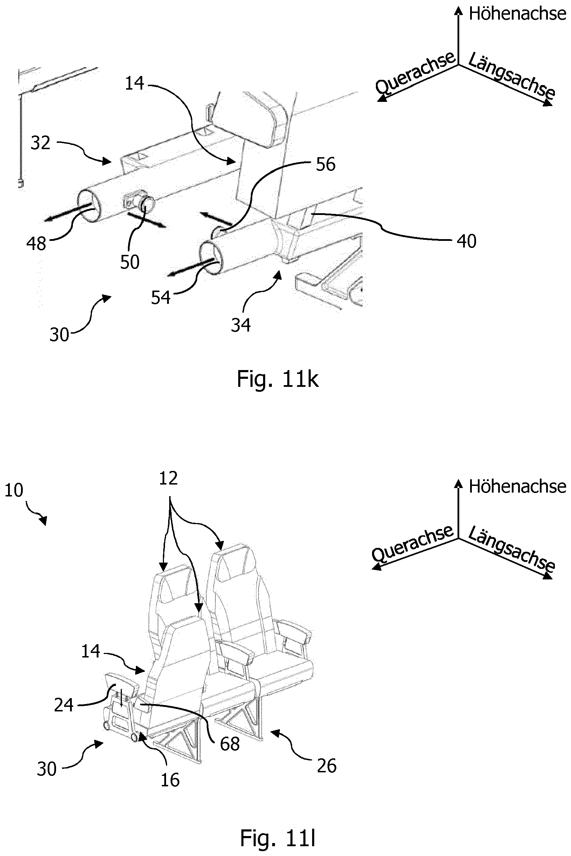

In einem darauffolgenden Schritt wird das Rückenlehnenelement 14 um die Achse parallel zur Höhenachse des Luftfahrzeugs um 180° gewendet und an der zweiten Rückenlehnenaufnahme 32 der Sitzhalterung 30 befestigt, wie in Figuren 11i und 11j gezeigt. Dies erfolgt indem die Verbindungsstreben 40 des Rückenlehnenelements 14 über die Durchgangsöffnungen 62 des Sitzelements 16 in die Aufnahmeöffnungen 44 der zweiten Rückenlehnenaufnahme 34 eingeschoben werden. Um die zweiten Rastelemente 38 jeweils mit den ersten Rastelementen 36 des Rückenlehnenelements 14 und den dritten Rastelementen 58 des Sitzelements 16 zu verrasten, werden der erste und der zweiten Verriegelungsbolzen 48, 54 in Richtung deren Verriegelungsposition bewegt und mittels des ersten und des zweiten Sperrelements 50, 56 in dieser Position gesperrt. Dieser Schritt ist in Figur 11k veranschaulicht, die eine vergrößerte Ansicht auf die Sitzhalterung 30 zeigt, wobei aus Gründen der Übersicht das Sitzelement 16 nicht dargestellt ist. Schließlich erfolgen ein Befestigen der Armlehnenelemente 24 an der Sitzhalterung 30 und dem Rückenlehnenelement 24, wie in Figur 11l gezeigt, und ein Sperren derselben in dieser Position mittels des weiteren Sperrmechanismus 74.

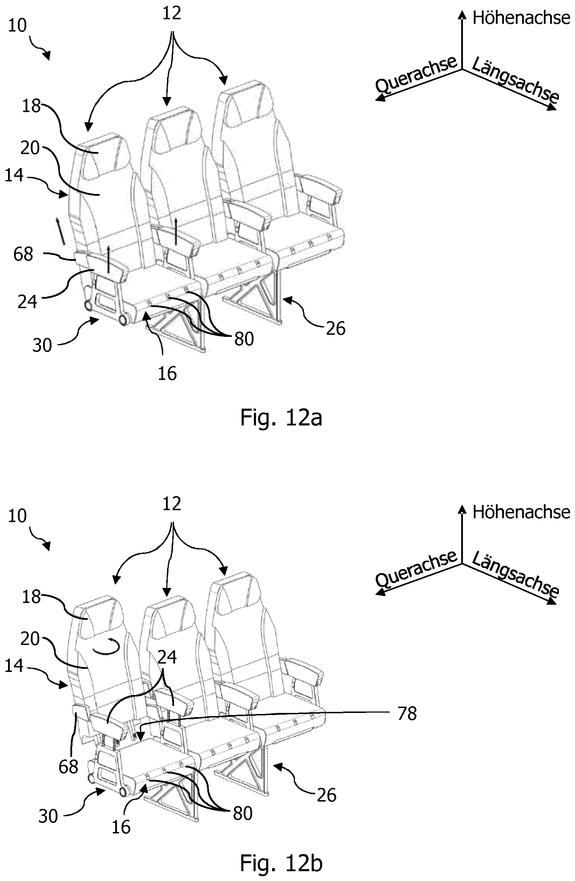

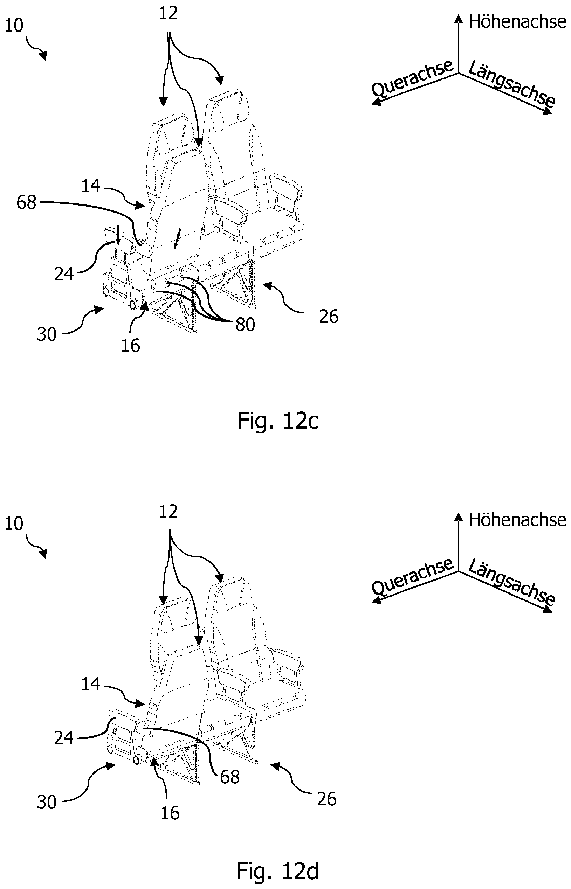

Figuren 12a bis 13 zeigen eine weitere Ausführungsform der Passagiersitzanordnung 10, bei der ein Umpositionieren des Rückenlehnenelements 14 von der ersten in die zweite Position und umgekehrt keinen Umbau des Sitzelements 16 bedingt. Hierzu ist das Sitzelement 16 im Bereich der ersten Rückenlehnenaufnahme 32 mit drei ersten Aussparungen 78 in Form von Durchgangsöffnungen versehen, über die die Verbindungsstreben 40 des Rückenlehnenelements 14 in die Aufnahmeöffnungen 42 der ersten Rückenlehnenaufnahme 32 einschiebbar sind. Mit anderen Worten, in den ersten Aussparungen 78 des Sitzelements 16 sind in einem installierten Zustand des Rückenlehnenelements 14 an der ersten Rückenlehnenaufnahme 32 die Verbindungsstreben 40 des Rückenlehnenelements 14 abschnittsweise aufgenommen. Weiterhin ist das Sitzelement 16 im Bereich der zweiten Rückenlehnenaufnahme 34 mit drei zweiten Aussparungen 80 in Form von Durchgangsöffnungen versehen, über die die Verbindungsstreben 40 des Rückenlehnenelements 14 in die Aufnahmeöffnungen 44 der zweiten Rückenlehnenaufnahme 34 einschiebbar sind. Mit anderen Worten, in den zweiten Aussparungen 80 des Sitzelements 16 sind in einem installierten Zustand des Rückenlehnenelements 14 an der zweiten Rückenlehnenaufnahme 34 die Verbindungsstreben 40 des Rückenlehnenelements 14 abschnittsweise aufgenommen.

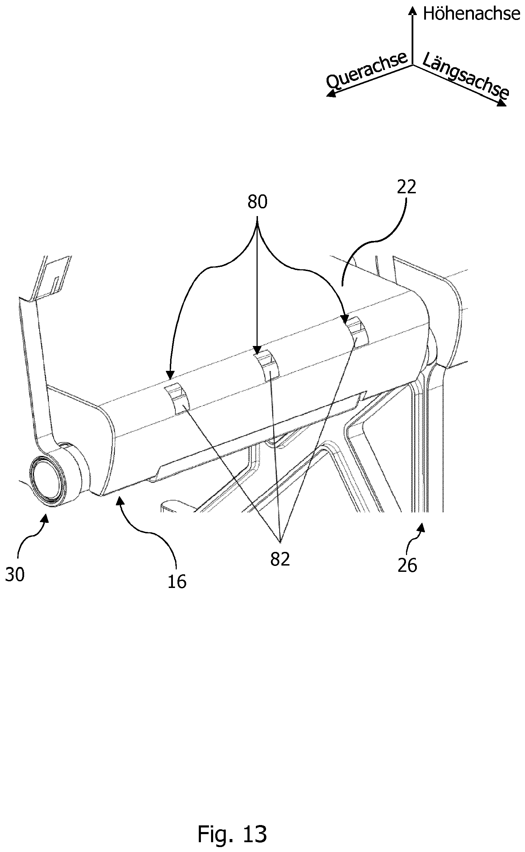

Das Sitzelements 16 umfasst weiterhin mehrere Verschlussklappen 82, siehe Figur 13, die jeweils in einer Öffnung der mehreren ersten oder zweiten Aussparungen 78, 80 im Bereich der Sitzfläche 22 des Sitzelements 16 angeordnet sind. Die Verschlussklappen 82 sind zwischen einer Verschlussposition, in der die jeweilige Öffnung der ersten oder zweiten Aussparung 78, 80 verschlossen ist, und einer Freigabeposition, in der die jeweilige Öffnung der ersten oder zweiten Aussparung 78, 80 freigegeben ist, bewegbar.

Im Folgenden wird unter Bezugnahme auf Figuren 12a bis 12d ein Verfahren zum Rekonfigurieren der Passagiersitzanordnung 10 der zweiten Ausführungsform spezifiziert. In einem ersten Schritt erfolgt ein Lösen und Bewegen der Armlehnenelemente 24 in deren Freigabeposition und ein Lösen des Rückenlehnenelements 14 von der ersten Rückenlehnenaufnahme 32 entsprechend dem in Figuren 11a bis 11l gezeigten Verfahren. Daraufhin wird das Rückenlehnenelement 14 um die Achse parallel zur Höhenachse des Luftfahrzeugs um 180° geschwenkt und an der zweiten Rückenlehnenaufnahme 34 in der zweiten Position befestigt. Hierzu werden die Verbindungsstreben 40 des Rückenlehnenelements 14 über die zweiten Aussparungen 80 des Sitzelements 16 in die Aufnahmeöffnungen 44 der zweiten Rückenlehnenaufnahme 34 eingeschoben. In einem weiteren Schritt werden die an den Verbindungsstrebe 40 ausgebildeten ersten Rastelemente 36 des Rückenlehnenelements 14 mit den in den Aufnahmeöffnungen 44 der zweiten Rückenlehnenaufnahme 34 bereitgestellten zweiten Rastelementen 38 verrastet, um das Rückenlehnenelement 14 mit der Sitzhalterung 30 lastübertragend zu verbinden. Schließlich erfolgen ein Befestigen Armlehnenelemente 24 an der Sitzhalterung 30.

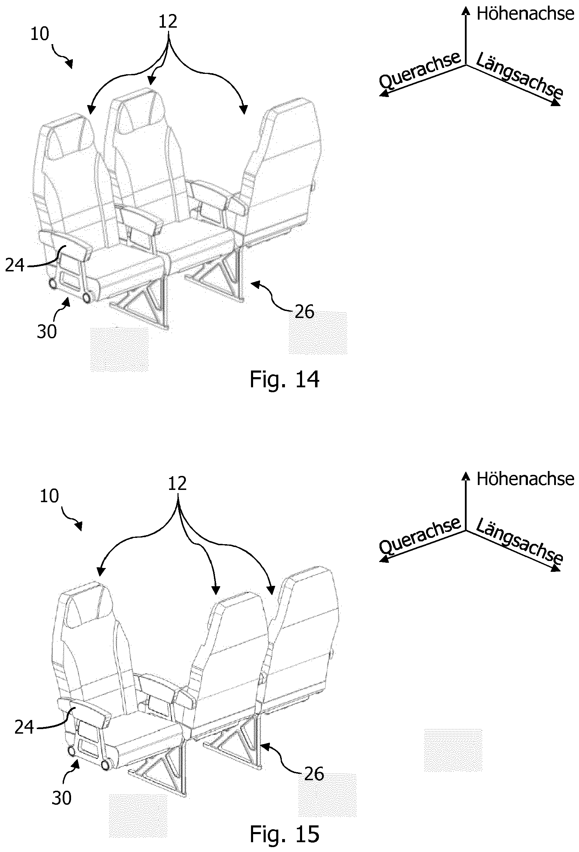

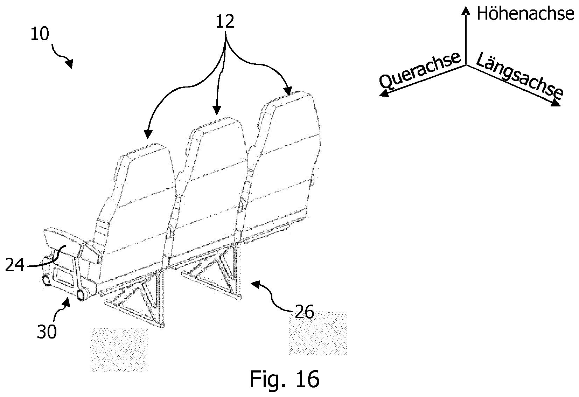

Figuren 14 bis 16 zeigen verschiedene Konfigurationen der Passagiersitzanordnung 10, bei denen die einzelnen Sitzeinheiten 12 unterschiedliche Ausrichtungen in Bezug auf die Längsrichtung des Luftfahrzeugs aufweisen.

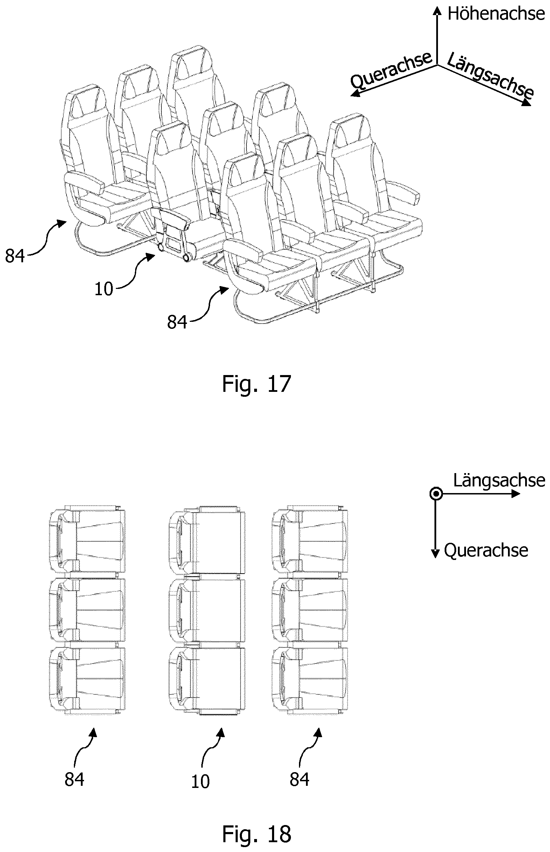

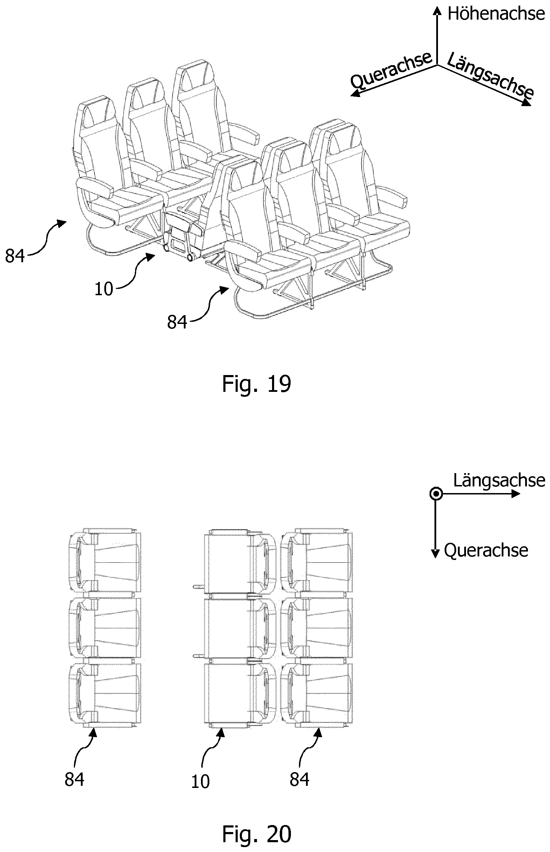

Figuren 17 bis 20 zeigen einen Flugzeugkabinenbereich unterschiedlicher Konfigurationen in jeweils einer perspektivischen Ansicht und einer Draufsicht. Der Flugzeugkabinenbereich umfasst die erfindungsgemäße Passagiersitzanordnung 10, die in Längsrichtung des Luftfahrzeugs zwischen zwei weiteren Passagiersitzanordnungen 84 in der Flugzeugkabine befestigt ist. Die Sitzeinheiten 12 der Passagiersitzanordnung 10 weisen je Konfiguration unterschiedliche Ausrichtungen in Bezug auf die Längsrichtung des Luftfahrzeugs auf. Im Speziellen zeigen Figuren 17 und 18 eine erste Konfiguration des Flugzeugkabinenbereichs, in der die einzelnen Sitzeinheiten der hintereinander angeordneten Passagiersitzanordnung 10 und der weiteren Passagiersitzanordnung 84 jeweils in Längsrichtung des Luftfahrzeugs ausgerichtet sind. Die Sitzeinheiten 12 der Passagiersitzanordnung 10 bilden dabei einen regulären Sitzbereich, der vorzugsweise während eines Lande- bzw. Startbetriebs des Luftfahrzeugs eingestellt ist. Eine zweite Konfiguration des Flugzeugkabinenbereichs ist in Figuren 19 bis 20 gezeigt, in der die Sitzeinheiten 12 der Passagiersitzanordnung 10 entgegen der Längsrichtung des Luftfahrzeugs ausgerichtet sind. Auf diese Weise wird ein alternativ verwendeter Sitzbereich gebildet, in dem sich Passagiere in der Flugzeugkabine gegenübersitzen. Die Ausgestaltung der Passagiersitzanordnung 10 ermöglicht, dass eine Umstellung von der ersten zu der zweiten Konfiguration des Flugzeugkabinenbereichs während eines Flugbetriebs des Luftfahrzeugs durch das Flugpersonal erfolgen kann.

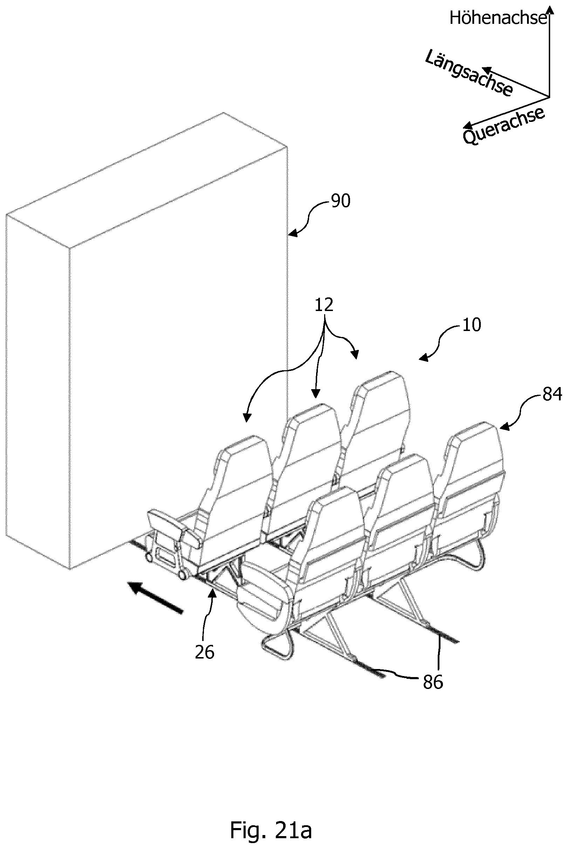

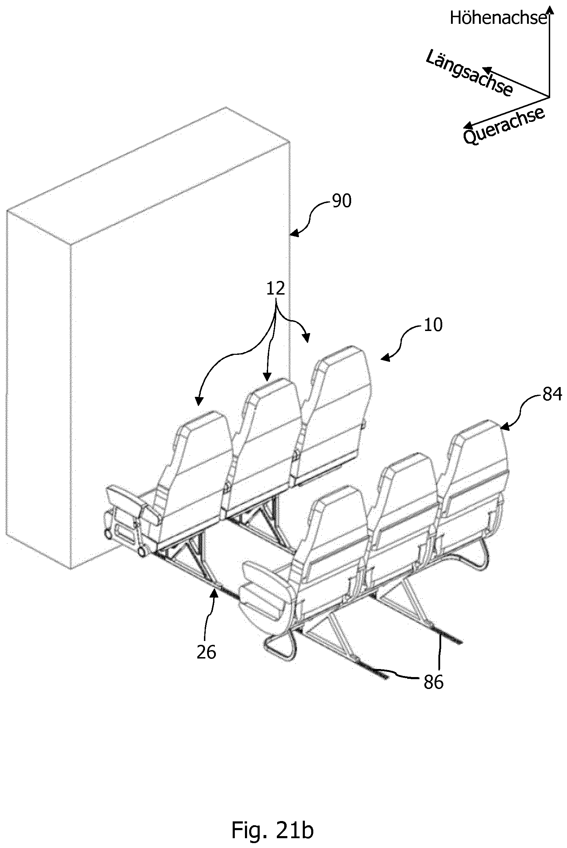

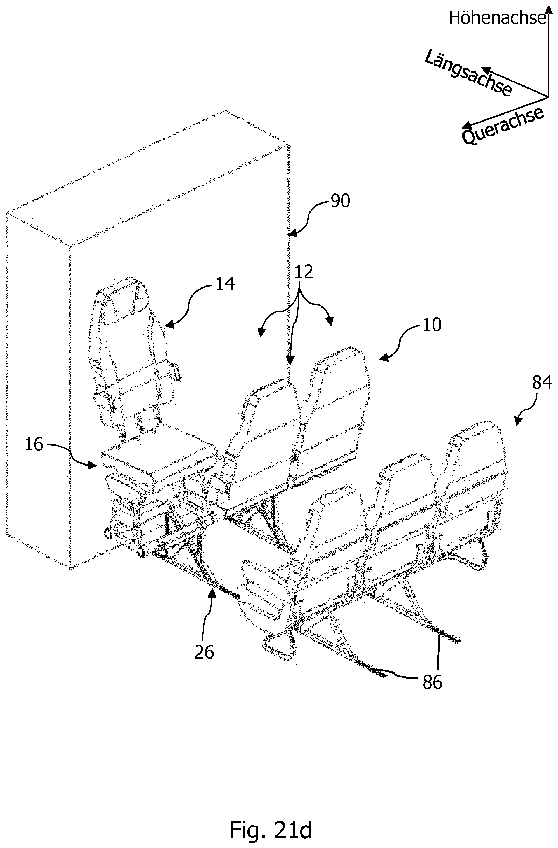

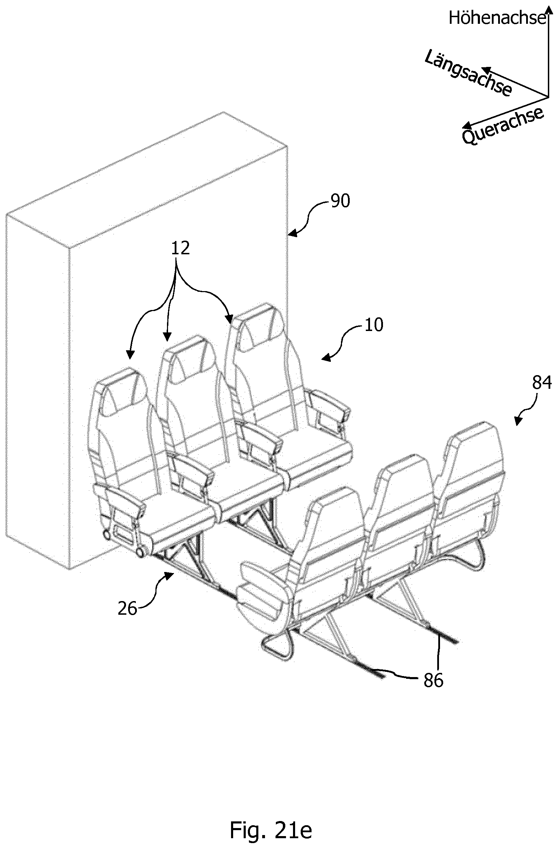

Figuren 21a bis 21h zeigen ein Verfahren zur Installation eines Passagiersitzsystems. Das Passagiersitzsystem umfasst die erfindungsgemäße Passagiersitzanordnung 10, die über den Stützrahmen 26 mit einer Sitzschiene 86 in einer Passagierkabine des Luftfahrzeugs lastübertragend verbindbar ist. Das Passagiersitzsystem umfasst ferner eine Tischanordnung 88, die in einem installierten Zustand der Passagiersitzanordnung 10 in einer Längsrichtung des Luftfahrzeugs vor der Passagiersitzanordnung 10 mit der Sitzschiene 86 des Luftfahrzeugs lastübertragend verbindbar ist.

In einem ersten Schritt wird die erfindungsgemäße Passagiersitzanordnung 10 in einer ersten Position in Längsrichtung des Luftfahrzeugs hinter einer weiteren Passagiersitzanordnung 84 und vor einem in der Passagierkabine angeordneten Monument 90 installiert. Dies erfolgt durch lastübertragendes Verbinden des Stützrahmens 26 der Passagiersitzanordnung 10 mit der Sitzschiene 86. Die Passagiersitzanordnung 10 weist eine erste Konfiguration auf, in der die Sitzeinheiten 12 in Längsrichtung des Luftfahrzeugs ausgerichtet sind. Dieser Zustand der Passagiersitzanordnung 10 ist vorzugsweise während eines Lande- bzw. Startbetriebs des Luftfahrzeugs eingestellt.

In einem weiteren Schritt erfolgt ein Lösen der lastübertragenden Verbindung zwischen der Passagiersitzanordnung 10 und der Sitzschiene 86. Daraufhin wird die Passagiersitzanordnung 10 in Längsrichtung des Luftfahrzeugs in eine zweite Position verschoben und erneut lastübertragend mit der Sitzschiene 86 verbunden, wie in Figuren 24a und 24b gezeigt. Ein Abstand zwischen der Passagiersitzanordnung 10 und der weiteren Passagiersitzanordnung 84 ist in der zweiten Position größer als in der ersten Position. Entsprechend ist ein Abstand zwischen der Passagiersitzanordnung 10 und dem Monument 90 in der zweiten Position kleiner als in der ersten Position.

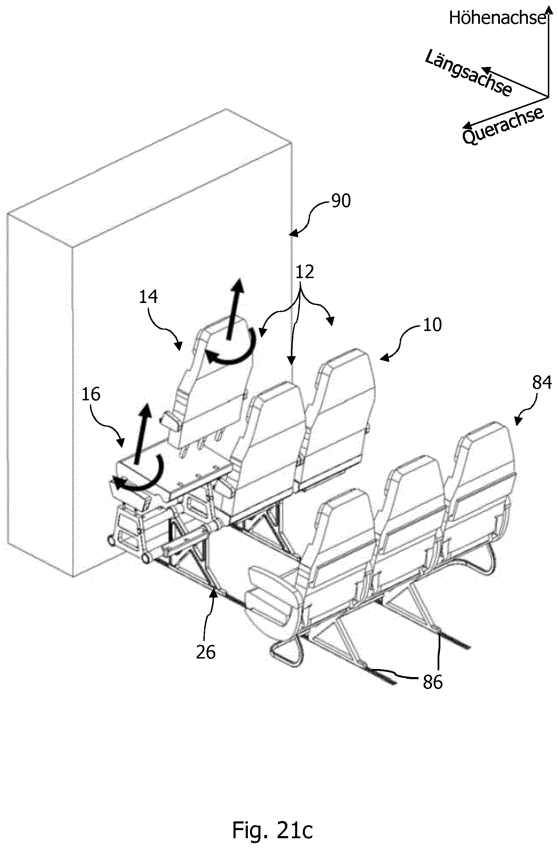

Wie in Figuren 21c bis 21e gezeigt, werden die einzelnen Sitzeinheiten 12 der Passagiersitzanordnung 10 daraufhin rekonfiguriert, sodass jede der Sitzeinheiten 12 der Passagiersitzanordnung 10 entgegen der Längsrichtung des Luftfahrzeugs ausgerichtet ist. Der Umbau der einzelnen Sitzeinheiten 12 erfolgt entsprechend dem in Figur 11a bis 11l gezeigten Verfahren. Insbesondere erfolgt dabei für jede Sitzeinheit 12 der Passagiersitzanordnung 10 ein Lösen des Rückenlehnenelements 14 von der ersten Rückenlehnenaufnahme 32 und ein Befestigen desselben an der zweiten Rückenlehnenaufnahme 34 der Sitzhalterung 30. Auf diese Weise wird eine Konfiguration der Passagiersitzanordnung eingestellt, in der die einzelnen Sitzeinheiten 12 der Passagiersitzanordnung 10 gegenüberliegend zu den Sitzeinheiten der weiteren Passagiersitzanordnung 84 angeordnet sind.

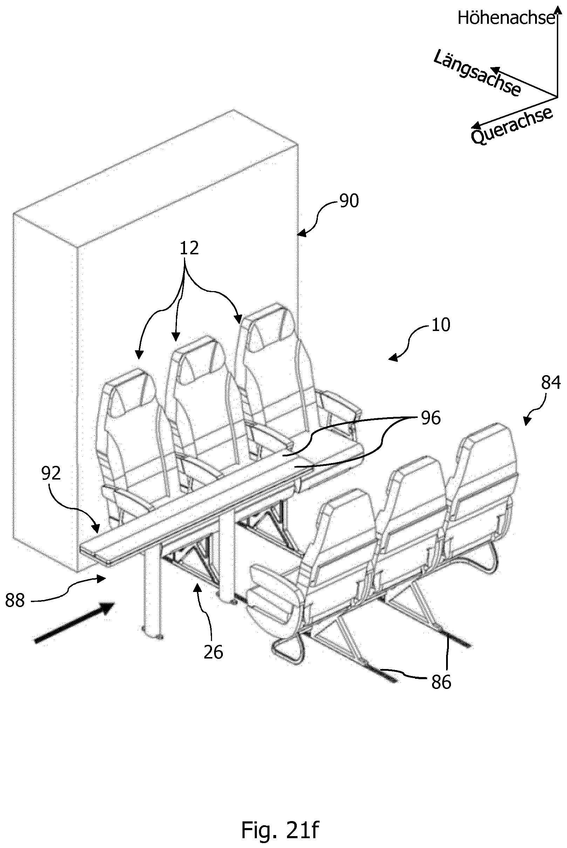

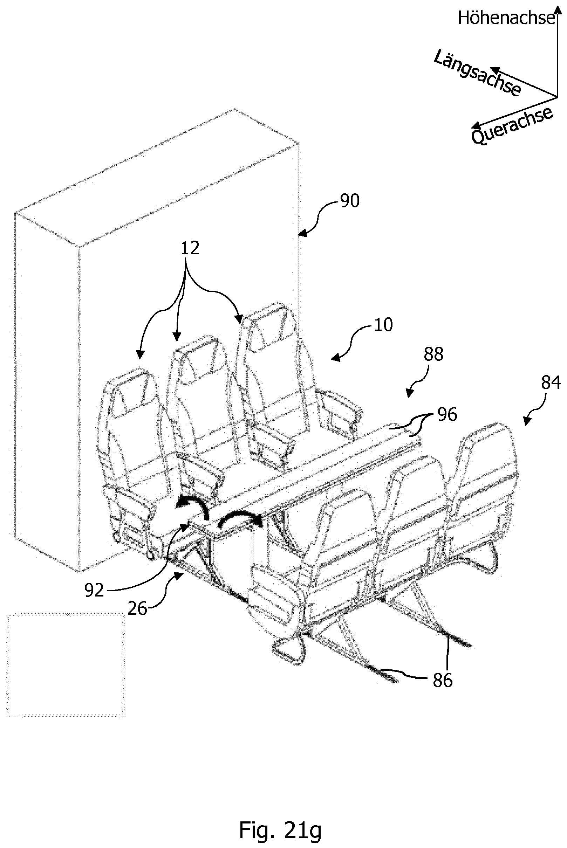

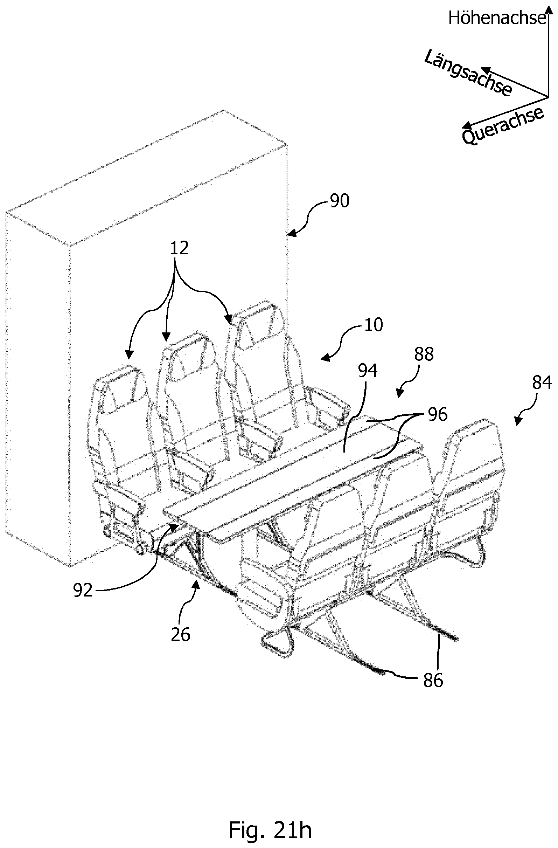

In einem nächsten Schritt wird die Tischanordnung 88 zwischen der Passagiersitzanordnung 10 und der weiteren Passagiersitzanordnung 84 in dem Luftfahrzeug installiert. Dies erfolgt durch lastübertragendes Verbinden der Tischanordnung 88 mit der Sitzschiene 86 des Luftfahrzeugs, wie in Figuren 21f bis 21g gezeigt. Die Tischanordnung 88 umfasst einen ausklappbaren Tisch 92, der eine Grundplatte 94 mit zwei an entgegengesetzten Enden der Grundplatte 94 verschwenkbar angeordneten Flügelplatten 96 umfasst. In einem eingeklappten Zustand des Tisches 92, sind die Flügelplatten 96 auf der Grundplatte 94 angrenzend zueinander angeordnet und bilden eine Oberfläche des Tisches 92, wie in Figur 21g veranschaulicht. Um den Tisch 92 in einen ausgeklappten Zustand zu überführen, werden die Flügelplatten 96 in eine aufgeklappte Position verschwenkt, sodass diese bündig zu der Grundplatte 94 angeordnet sind und zusammen mit dieser eine Oberfläche des Tisches 92 bilden, wie in Figur 21h gezeigt. Das hier beschriebene Passagiersitzsystem ermöglicht, dass die vorangehenden beschriebenen Verfahrensschritte auch während eines Flugbetriebs des Luftfahrzeugs durch das Flugpersonal durchgeführt werden können.

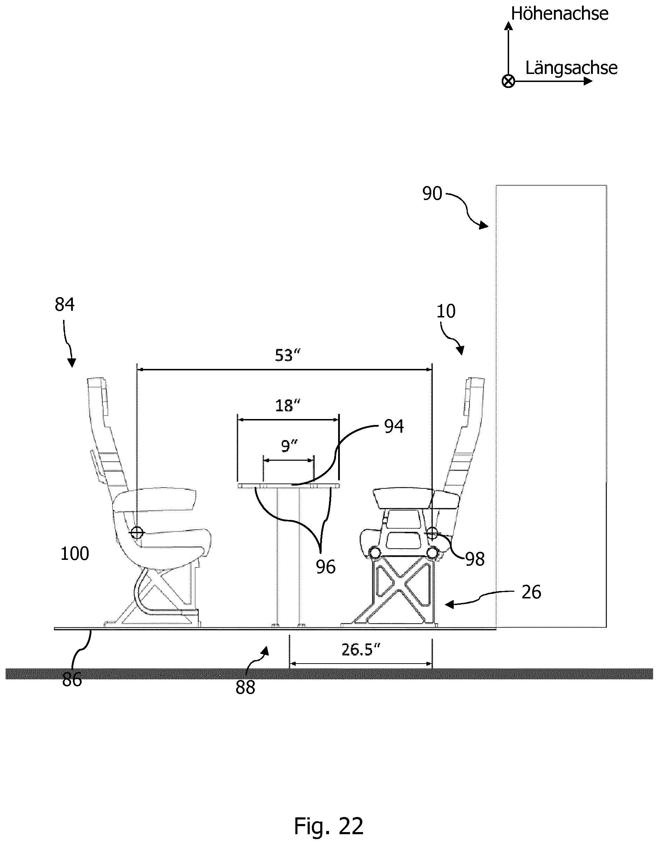

Figur 22 zeigt eine Seitenansicht auf die in Figur 21h gezeigte Anordnung des Passagiersitzsystems. Darin veranschaulicht sind Abmessungen der einzelnen Komponenten des Passagiersitzsystems und deren Abstände zueinander. Die darin dargestellten Werte für die Abmessungen und Abstände stellen ein Mindestmaß, d.h. untere Schwellenwerte, dar.

Als Referenzpunkte 98, 100 der Passagiersitzanordnung 10 und der weiteren Passagiersitzanordnung 84 dient jeweils ein Verbindungspunkt zwischen der Sitzfläche und der Rückenlehnenfläche der Sitzeinheiten. Wie in Figur 25 gezeigt, beträgt ein Abstand in Längsrichtung des Luftfahrzeugs zwischen dem Referenzpunkt 98 der Passagiersitzanordnung 10 und dem Referenzpunkt 100 der weiteren Passagiersitzanordnung 84 mindestens 134,62cm (53"). Die Tischanordnung 88 ist spiegelsymmetrisch zu einer Symmetrieebene parallel zu der Höhen- und Querachse des Luftfahrzeugs. In Längsrichtung des Luftfahrzeugs ist die Tischanordnung 88 mittig zwischen dem Referenzpunkt 98 der Passagiersitzanordnung 10 und dem Referenzpunkt 100 der weiteren Passagiersitzanordnung 84 angeordnet. Somit beträgt ein Abstand in Längsrichtung des Luftfahrzeugs zwischen der Symmetrieebene der Tischanordnung und dem Referenzpunkt 98 der Passagiersitzanordnung 10 oder dem Referenzpunkt 100 der weiteren Passagiersitzanordnung 84 mindestens 67,31 cm (26,5"). In einem ausgeklappten Zustand des Tisches 92 erstreckt sich dessen Oberfläche in Längsrichtung des Luftfahrzeugs mindestens über 45,72 cm (18"), wobei sich die Grundplatte 94 des Tisches 92 in Längsrichtung des Luftfahrzeugs mindestens über 22,86 cm (9") erstreckt.

## Patentansprüche

1. Passagiersitzanordnung (10) zur Installation in einem Luftfahrzeug, die umfasst:
- wenigstens eine Sitzeinheit (12) mit einem Rückenlehnenelement (14) und einem Sitzelement (16); und
- einen die wenigstens eine Sitzeinheit (12) tragenden Stützrahmen (26) mit wenigstens einer Sitzhalterung (30), die eine erste Rückenlehnenaufnahme (32), an der das Rückenlehnenelement (14) lösbar und lastübertragend an der Sitzhalterung (30) in einer ersten Position befestigbar ist, und eine zweite Rückenlehnenaufnahme (34), an der das Rückenlehnenelement (32) lösbar und lastübertragend an der Sitzhalterung (30) in einer zweiten Position befestigbar ist, aufweist, wobei in einem in dem Luftfahrzeug installierten Zustand der Passagiersitzanordnung (10) das Rückenlehnenelement (14) in einem an der ersten Rückenlehnenaufnahme (32) befestigten Zustand relativ zu einem an der zweiten Rückenlehnenaufnahme (34) befestigten Zustand relativ zu einer Längsachse des Luftfahrzeugs verschwenkt ist,
wobei das Rückenlehnenelement (14) mehrere erste Rastelemente (36) umfasst, die jeweils dazu eingerichtet sind, lösbar mit einem von mehreren komplementären, jeweils in der ersten und der zweiten Rückenlehnenaufnahme (32, 34) ausgebildeten zweiten Rastelementen (38) zu verrasten, um das Rückenlehnenelement (14) lastübertragend an der Sitzhalterung (30) in der ersten oder zweiten Position zu befestigen, und
wobei die Passagiersitzanordnung (10) **dadurch gekennzeichnet ist, dass** sie ferner umfasst:
- einen das Rückenlehnenelement (14) mit der ersten und der zweiten Rückenlehnenaufnahme (32, 34) verriegelnden Verriegelungsmechanismus (46), der dazu eingerichtet ist, die ersten Rastelemente (36) und/oder die zweiten Rastelemente (38) der ersten und der zweiten Rückenlehnenaufnahme (32, 34) zwischen einer Verrieglungsposition, in der die ersten Rastelemente (36) mit den zweiten Rastelementen (38) der ersten oder der zweiten Rückenlehnenaufnahme (32, 34) verrastet sind, und einer Freigabeposition, in der eine Bewegung der ersten Rastelemente (36) relativ zu den zweiten Rastelementen (38) der ersten oder der zweiten Rückenlehnenaufnahme (32, 34) freigegeben sind, zu bewegen,
wobei die erste Rückenlehnenaufnahme (32) einen ersten Verriegelungsbolzen (48) und die zweite Rückenlehnenaufnahme (34) einen zweiten Verriegelungsbolzen (54) umfassen, die den Verrieglungsmechanismus (46) bilden, wobei an einem Umfang des ersten und des zweiten Verriegelungsbolzens (48, 54) die mehreren zweiten Rastelemente (38) angeordnet sind, und wobei der erste und der zweite Verriegelungsbolzen (48, 54) jeweils in einer Richtung entlang ihrer Längsrichtung bewegbar sind, um das zweite Rastelement (38) der ersten bzw. der zweiten Rückenlehnenaufnahme (32, 34) zwischen ihrer Verriegelungsposition und Freigabeposition zu bewegen.

2. Passagiersitzanordnung nach Anspruch 1, bei der im in dem Luftfahrzeug installierten Zustand der Passagiersitzanordnung (10) das Rückenlehnenelement (14) in dem an der ersten Rückenlehnenaufnahme (32) befestigten Zustand relativ zu dem an der zweiten Rückenlehnenaufnahme (34) befestigten Zustand um im Wesentlichen 90° oder 180° relativ zu der Längsachse des Luftfahrzeugs verschwenkt ist.

3. Passagiersitzanordnung nach Anspruch 1 oder 2, wobei insbesondere das wenigstens eine erste Rastelement (36) an wenigstens einer Verbindungsstrebe (40) des Rückenlehnenelements (14) ausgebildet ist und die erste und die zweite Rückenlehnenaufnahme (32, 34) jeweils mit wenigstens einer das zweite Rastelement (38) aufweisenden Aufnahmeöffnung (42, 44) versehen sind, in die die mit dem ersten Rastelement (36) ausgebildete Verbindungsstrebe (40) einschiebbar ist, um das erste Rastelement (36) mit einem der zweiten Rastelemente (38) zu verrasten.

4. Passagiersitzanordnung nach Anspruch 1, bei der der Verriegelungsmechanismus (46) umfasst:
- wenigstens eine Federeinheit, die das erste Rastelement (36) und/oder das zweite Rastelement (38) der ersten und/oder der zweiten Rückenlehnenaufnahme (32, 34) in Richtung ihrer/seiner Verriegelungsposition oder Freigabeposition belastet; und/oder
- einen das erste Rastelement (36) und/oder das zweite Rastelement (38) der ersten und/oder der zweiten Rückenlehnenaufnahme (32, 34) in ihrer/seiner Verriegelungsposition und/oder Sperrposition sperrenden Sperrmechanismus (50, 56), der zwischen einer Sperrposition, in der eine Bewegung des ersten Rastelements (36) und/oder des zweiten Rastelements (38) der ersten und/oder der zweiten Rückenlehnenaufnahme (32, 34) zwischen ihrer/seiner Verriegelungsposition und seiner Freigabeposition gesperrt ist, und einer Freigabeposition, in der eine Bewegung des ersten Rastelements (36) und/oder des zweiten Rastelements (38) der ersten und/oder der zweiten Rückenlehnenaufnahme (32, 34) zwischen ihrer/seiner Verriegelungsposition und Freigabeposition freigegeben ist, bewegbar ist;

5. Passagiersitzanordnung nach einem der Ansprüche 1 bis 4, bei der das Sitzelement (16) lösbar und lastübertragend an der ersten Rückenlehnenaufnahme (32) in einer ersten Position oder an der zweiten Rückenlehnenaufnahme (34) in einer zweiten Position befestigbar ist, wobei in dem im Luftfahrzeug installierten Zustand der Passagiersitzanordnung (10) das Sitzelement (16) in einem an der ersten Rückenlehnenaufnahme (32) befestigten Zustand relativ zu einem an der zweiten Rückenlehnenaufnahme (34) befestigten Zustand um eine Achse parallel zu einer Höhenachse des Luftfahrzeugs verschwenkt ist, und wobei das Rückenlehnenelement (14) an der ersten Rückenlehnenaufnahme (32) in einem Zustand befestigbar ist, in dem das Sitzelement (16) an der zweiten Rückenlehnenaufnahme (34) befestig ist, oder das Rückenlehnenelement (14) an der zweiten Rückenlehnenaufnahme (34) in einem Zustand befestigbar ist, in dem das Sitzelement (16) an der ersten Rückenlehnenaufnahme (32) befestig ist.

6. Passagiersitzanordnung nach Anspruch 5, bei der im in dem Luftfahrzeug installierten Zustand der Passagiersitzanordnung (10) das Sitzelement (16) in dem an der ersten Rückenlehnenaufnahme (32) installierten Zustand relativ zu dem an der zweiten Rückenlehnenaufnahme (34) installierten Zustand um im Wesentlichen 90° oder 180° um die Achse parallel zu der Höhenachse des Luftfahrzeugs verschwenkt ist.

7. Passagiersitzanordnung nach Anspruch 5 oder 6, bei der das Sitzelement (16) wenigstens ein zu dem zweiten Rastelement (38) komplementäres drittes Rastelement (58) aufweist, das dazu eingerichtet ist, lösbar mit wenigstens einem der in der ersten und der zweiten Rückenlehnenaufnahme (32, 34) ausgebildeten zweiten Rastelemente (38) zu verrasten, um das Sitzelement (16) lastübertragend an der Sitzhalterung (30) in seiner ersten oder zweiten Position zu befestigen, wobei das wenigstens eine dritte Rastelement (54) insbesondere an wenigstens einer Verbindungsstrebe (60) des Sitzelements (16) ausgebildet ist, die in die wenigstens eine Aufnahmeöffnung (42, 44) der ersten oder der zweiten Rückenlehnenaufnahme (32, 34) einschiebbar ist, um das dritte Rastelement (58) mit einem der zweiten Rastelemente (38) zu verrasten.

8. Passagiersitzanordnung nach einem der Ansprüche 5 bis 7, bei der das Sitzelement (16) wenigstens eine Aussparung (62) aufweist, in der in einem installierten Zustand des Rückenlehnenelements (14) und des Sitzelements (16) an der Sitzhalterung (30) die erste oder zweite Rückenlehnenaufnahme (32, 34) und/oder das Rückenlehnenelement (14), insbesondere die wenigstens eine Verbindungsstrebe (40) des Rückenlehnenelements (14), abschnittsweise aufgenommen sind/ist.

9. Passagiersitzanordnung nach einem der Ansprüche 1 bis 4, bei der das Sitzelement (16) an der Sitzhalterung (30) befestigt ist und im Bereich der ersten Rückenlehnenaufnahme (32) mit wenigstens einer ersten Aussparung (78), in der in einem installierten Zustand des Rückenlehnenelements (14) an der ersten Rückenlehnenaufnahme (32) die erste Rückenlehnenaufnahme (32) und/oder das Rückenlehnenelement (14), insbesondere die wenigstens eine Verbindungsstrebe (40) des Rückenlehnenelements (14), abschnittsweise aufgenommen sind/ist, und im Bereich der zweiten Rückenlehnenaufnahme (34) mit wenigstens einer zweiten Aussparung (80), in der in einem installierten Zustand des Rückenlehnenelements (14) an der zweiten Rückenlehnenaufnahme (34) die zweite Rückenlehnenaufnahme (34) und/oder das Rückenlehnenelement (14), insbesondere die wenigstens eine Verbindungsstrebe (40) des Rückenlehnenelements (14), abschnittsweise aufgenommen sind/ist, versehen.

10. Passagiersitzanordnung nach einem der Ansprüche 1 bis 9, die ferner wenigstens ein Armlehnenelement (24) umfasst, das lösbar und lastübertragend an dem Rückenlehnenelement (14) und der Sitzhalterung (30) befestigbar ist.

11. Passagiersitzanordnung nach Anspruch 10, bei der das Armlehnenelement (24) umfasst:
- ein erstes Verbindungselement (64), das dazu eingerichtet ist, lösbar mit einem an dem Rückenlehnenelement (14) angebrachten komplementären zweiten Verbindungselement (66) zu verrasten, um das Armlehnenelement (24) lastübertragend an dem Rückenlehnenelement (14) zu befestigen, wobei insbesondere das erste Verbindungselement (64) und das zweite Verbindungselement (66) in einem aneinander verrasteten Zustand derart zusammenwirken, dass eine rotatorische Bewegung des Armlehnenelements (24) relativ zu dem Rückenlehnenelement (14) gesperrt ist und eine translatorische Bewegung des Armlehnenelements (24) relativ zu dem Rückenlehnenelement (14) in Richtung einer Freigabeposition des Armlehnenelements (24) freigegeben ist, um das erste Verbindungselement (64) von dem zweiten Verbindungselement (66) zu lösen; und/oder
- ein drittes Verbindungselement (69), das dazu eingerichtet ist, lösbar mit einem an der Sitzhalterung (30) angebrachten vierten Verbindungselement (70) zu verrasten, um das Armlehnenelement (24) lastübertragend an der Sitzhalterung (30) zu befestigen, wobei insbesondere das dritte Verbindungselement (69) und das vierte Verbindungselement (70) in einem aneinander verrasteten Zustand derart zusammenwirken, dass eine rotatorische Bewegung des Armlehnenelements (24) relativ zu der Sitzhalterung (30) gesperrt ist und eine translatorische Bewegung des Armlehnenelements (24) relativ zu der Sitzhalterung (30) in Richtung der Freigabeposition des Armlehnenelements (24) freigegeben ist, um das dritte Verbindungselement (69) von dem vierten Verbindungselement (70) zu lösen; und/oder
- einen weiteren Sperrmechanismus (74), der dazu eingerichtet ist, in einem an dem Rückenlehnenelement (14) und der Sitzhalterung (30) befestigten Zustand des Armlehnenelements (24) eine Bewegung des Armlehnenelements (24) in Richtung seiner Freigabeposition zu sperren.

12. Passagiersitzsystem, das umfasst:
- wenigstens eine Passagiersitzanordnung (10) nach einem der Ansprüche 1 bis 11, die über den Stützrahmen (26) mit einer Struktur (86) des Luftfahrzeugs lastübertragend verbindbar ist; und
- eine Tischanordnung (88), die in einem in dem Luftfahrzeug installierten Zustand der Passagiersitzanordnung (10) in einer Längsrichtung des Luftfahrzeugs vor und/oder hinter der Passagiersitzanordnung (10) mit der Struktur (86) des Luftfahrzeugs lastübertragend verbindbar ist.

13. Verfahren zur Installation eines Passagiersitzsystems in einem Luftfahrzeug, das die Schritte umfasst:
- Installieren einer Passagiersitzanordnung (10) nach einem der Ansprüche 1 bis 11 in dem Luftfahrzeug durch lastübertragendes Verbinden des Stützrahmens (26) der Passagiersitzanordnung (10) mit einer Struktur (86) des Luftfahrzeugs;
- Lösen des Rückenlehnenelements (14) von der ersten Rückenlehnenaufnahme (32) der Sitzhalterung (30);
- Befestigen des Rückenlehnenelements (14) an der zweiten Rückenlehnenaufnahme (34) der Sitzhalterung (30); und
- Installieren einer Tischanordnung (88) in einer Längsrichtung des Luftfahrzeugs vor oder hinter der Passagiersitzanordnung (10) in dem Luftfahrzeug durch lastübertragendes Verbinden der Tischanordnung (88) mit der Struktur (86) des Luftfahrzeugs.

## Claims

1. Passenger seat arrangement (10) for installation in an aircraft, which comprises:
- at least one seat unit (12) with a backrest element (14) and a seat element (16); and
- a supporting frame (26), which carries the at least one seat unit (12) and comprises at least one seat mounting (30), which has a first backrest holder (32), to which the backrest element (14) can be fixed in a releasable and load-transferring manner in a first position on the seat mounting (30), and a second backrest holder (34), to which the backrest element (32) can be fixed in a releasable and load-transferring manner in a second position on the seat mounting (30), wherein, in a state of the passenger seat arrangement (10) in which it is installed in the aircraft, the backrest element (14) is pivoted in relation to a longitudinal axis of the aircraft in a state in which it is fixed to the first backrest holder (32) relative to a state in which it is fixed to the second backrest holder (34),
wherein the backrest element (14) comprises a plurality of first engaging elements (36), which are designed to engage releasably with one of a plurality of complementary second engaging elements (38) respectively formed in the first and the second backrest holder (32, 34), in order to fix the backrest element (14) in a load-transferring manner in the first or second position on the seat mounting (30), and
wherein the passenger seat arrangement (10) is **characterized in that** it also comprises:
- a locking mechanism (46), which locks the backrest element (14) to the first and the second backrest holder (32, 34) and is designed to move the first engaging elements (36) and/or the second engaging elements (38) of the first and the second backrest holder (32, 34) between a locking position, in which the first engaging elements (36) are engaged with the second engaging elements (38) of the first or the second backrest holder (32, 34), and a release position, in which a movement of the first engaging elements (36) in relation to the second engaging elements (38) of the first or the second backrest holder (32, 34) is released,
wherein the first backrest holder (32) comprises a first locking bolt (48) and the second backrest holder (34) comprises a second locking bolt (54), which form the locking mechanism (46), wherein the plurality of second engaging elements (38) are arranged on a circumference of the first and the second locking bolt (48, 54), and wherein the first and the second locking bolt (48, 54) are respectively movable in a direction along their longitudinal direction, in order to move the second engaging element (38) of the first or second backrest holder (32, 34) between its locking position and release position.

2. Passenger seat arrangement according to Claim 1, in which, in the state of the passenger seat arrangement (10) in which it is installed in the aircraft, the backrest element (14) is pivoted by substantially 90° or 180° in relation to the longitudinal axis of the aircraft in the state in which it is fixed to the first backrest holder (32) relative to the state in which it is fixed to the second backrest holder (34).

3. Passenger seat arrangement according to Claim 1 or 2, wherein in particular the at least one first engaging element (36) is formed on at least one connecting strut (40) of the backrest element (14) and the first and the second backrest holder (32, 34) are respectively provided with at least one receiving opening (42, 44) which has the second engaging element (38) and into which the connecting strut (40) formed with the first engaging element (36) can be pushed, in order to engage the first engaging element (36) with one of the second engaging elements (38).

4. Passenger seat arrangement according to Claim 1, in which the locking mechanism (46) comprises:
at least one spring unit, which loads the first engaging element (36) and/or the second engaging element (38) of the first and/or the second backrest holder (32, 34) in the direction of their/its locking position or release position; and/or
- a blocking mechanism (50, 56), which blocks the first engaging element (36) and/or the second engaging element (38) of the first and/or the second backrest holder (32, 34) in their/its locking position and/or blocking position and is movable between a blocking position, in which a movement of the first engaging element (36) and/or the second engaging element (38) of the first and/or the second backrest holder (32, 34) between their/its locking position and release position is blocked, and a release position, in which a movement of the first engaging element (36) and/or the second engaging element (38) of the first and/or the second backrest holder (32, 34) between their/its locking position and release position is released.

5. Passenger seat arrangement according to one of Claims 1 to 4, in which the seat element (16) can be fixed in a releasable and load-transferring manner to the first backrest holder (32) in a first position or to the second backrest holder (34) in a second position, wherein, in the state of the passenger seat arrangement (10) in which it is installed in the aircraft, the seat element (16) is pivoted about an axis parallel to a vertical axis of the aircraft in a state in which it is fixed to the first backrest holder (32) relative to a state in which it is fixed to the second backrest holder (34), and wherein the backrest element (14) can be fixed to the first backrest holder (32) in a state in which the seat element (16) is fixed to the second backrest holder (34), or the backrest element (14) can be fixed to the second backrest holder (34) in a state in which the seat element (16) is fixed to the first backrest holder (32).

6. Passenger seat arrangement according to Claim 5, in which, in the state of the passenger seat arrangement (10) in which it is installed in the aircraft, the seat element (16) is pivoted by substantially 90° or 180° about the axis parallel to the vertical axis of the aircraft in the state in which it is installed on the first backrest holder (32) relative to the state in which it is installed on the second backrest holder (34).

7. Passenger seat arrangement according to Claim 5 or 6, in which the seat element (16) has at least one third engaging element (58), which complements the second engaging element (38) and is designed to engage releasably with at least one of the second engaging elements (38) formed in the first and the second backrest holder (32, 34), in order to fix the seat element (16) in a load-transferring manner in its first or second position on the seat mounting (30), wherein the at least one third engaging element (54) is formed in particular on at least one connecting strut (60) of the seat element (16), which can be pushed into the at least one receiving opening (42, 44) of the first or the second backrest holder (32, 34), in order to engage the third engaging element (58) with one of the second engaging elements (38).

8. Passenger seat arrangement according to one of Claims 5 to 7, in which the seat element (16) has at least one clearance (62), in which, in an installed state of the backrest element (14) and the seat element (16) on the seat mounting (30), the first or second backrest holder (32, 34) and/or the backrest element (14), in particular the at least one connecting strut (40) of the backrest element (14), are/is partly accommodated.

9. Passenger seat arrangement according to one of Claims 1 to 4, in which the seat element (16) is fixed to the seat mounting (30) and is provided in the region of the first backrest holder (32) with at least one first clearance (78), in which, in an installed state of the backrest element (14) on the first backrest holder (32), the first backrest holder (32) and/or the backrest element (14), in particular the at least one connecting strut (40) of the backrest element (14), are/is partly accommodated, and is provided in the region of the second backrest holder (34) with at least one second clearance (80), in which, in an installed state of the backrest element (14) on the second backrest holder (34), the second backrest holder (34) and/or the backrest element (14), in particular the at least one connecting strut (40) of the backrest element (14), are/is partly accommodated.

10. Passenger seat arrangement according to one of Claims 1 to 9, which also comprises at least one armrest element (24), which can be fixed in a releasable and load-transferring manner to the backrest element (14) and the seat mounting (30).

11. Passenger seat arrangement according to Claim 10, in which the armrest element (24) comprises:
- a first connecting element (64), which is designed to engage releasably with a complementary second connecting element (66) attached to the backrest element (14), in order to fix the armrest element (24) to the backrest element (14) in a load-transferring manner, wherein in particular the first connecting element (64) and the second connecting element (66) interact in a state in which they are engaged with one another in such a way that a rotational movement of the armrest element (24) in relation to the backrest element (14) is blocked and a translational movement of the armrest element (24) in relation to the backrest element (14) in the direction of a release position of the armrest element (24) is released, in order to release the first connecting element (64) from the second connecting element (66); and/or
- a third connecting element (69), which is designed to engage releasably with a fourth connecting element (70) attached to the seat mounting (30), in order to fix the armrest element (24) on the seat mounting (30) in a load-transferring manner, wherein in particular the third connecting element (69) and the fourth connecting element (70) interact in a state in which they are engaged with one another in such a way that a rotational movement of the armrest element (24) in relation to the seat mounting (30) is blocked and a translational movement of the armrest element (24) in relation to the seat mounting (30) in the direction of the release position of the armrest element (24) is released, in order to release the third connecting element (69) from the fourth connecting element (70); and/or
- a further blocking mechanism (74), which is designed to block a movement of the armrest element (24) in the direction of its release position in a state of the armrest element (24) in which it is fixed to the backrest element (14) and the seat mounting (30).

12. Passenger seat system, which comprises:
- at least one passenger seat arrangement (10) according to one of Claims 1 to 11, which can be connected in a load-transferring manner by way of the supporting frame (26) to a structure (86) of the aircraft; and
- a table arrangement (88), which, in a state of the passenger seat arrangement (10) in which it is installed in the aircraft, can be connected in a load-transferring manner to the structure (86) of the aircraft in front of and/or behind the passenger seat arrangement (10) in a longitudinal direction of the aircraft.

13. Method for installing a passenger seat system in an aircraft, which comprises the steps of:
- installing a passenger seat arrangement (10) according to one of Claims 1 to 11 in the aircraft by connecting the supporting frame (26) of the passenger seat arrangement (10) to a structure (86) of the aircraft in a load-transferring manner;
- releasing the backrest element (14) from the first backrest holder (32) of the seat mounting (30);
- fixing the backrest element (14) to the second backrest holder (34) of the seat mounting (30); and
- installing in the aircraft a table arrangement (88) in front of or behind the passenger seat arrangement (10) in a longitudinal direction of the aircraft by connecting the table arrangement (88) to the structure (86) of the aircraft in a load-transferring manner.

## Revendications

1. Agencement de siège de passager (10) pour l'installation dans un aéronef, comprenant :
- au moins une unité de siège (12) avec un élément de dossier (14) et un élément de siège (16) ; et
- un cadre de support (26) portant l'au moins une unité de siège (12), avec au moins un support de siège (30) qui présente un premier logement de dossier (32) au niveau duquel l'élément de dossier (14) peut être fixé au support de siège (30) de manière amovible et avec transfert de charge dans une première position, et un deuxième logement de dossier (34) au niveau duquel l'élément de dossier (32) peut être fixé au support de siège (30) de manière amovible et avec transfert de charge dans une deuxième position, l'élément de dossier (14), dans un état de l'agencement de siège de passager (10) installé dans l'aéronef, étant pivoté par rapport à un axe longitudinal de l'aéronef dans un état fixé au premier logement de dossier (32) par rapport à un état fixé au deuxième logement de dossier (34),
l'élément de dossier (14) comprenant plusieurs premiers éléments d'encliquetage (36) qui sont à chaque fois prévus pour s'encliqueter de manière amovible avec l'un parmi plusieurs deuxièmes éléments d'encliquetage complémentaires (38) réalisés à chaque fois dans le premier et dans le deuxième logement de dossier (32, 34), afin de fixer l'élément de dossier (14) avec transfert de charge au support de siège (30) dans la première ou la deuxième position, et
l'agencement de siège de passager (10) étant **caractérisé en ce qu'**il comprend en outre :
- un mécanisme de verrouillage (46) verrouillant l'élément de dossier (14) avec le premier et le deuxième logement de dossier (32, 34), lequel est prévu pour déplacer les premiers éléments d'encliquetage (36) et/ou les deuxièmes éléments d'encliquetage (38) du premier et du deuxième logement de dossier (32, 34) entre une position de verrouillage dans laquelle les premiers éléments d'encliquetage (36) sont encliquetés avec les deuxièmes éléments d'encliquetage (38) du premier ou du deuxième logement de dossier (32, 34), et une position de libération dans laquelle un mouvement des premiers éléments d'encliquetage (36) par rapport aux deuxièmes éléments d'encliquetage (38) du premier ou du deuxième logement de dossier (32, 34) est libéré,
le premier logement de dossier (32) comprenant un premier boulon de verrouillage (48) et le deuxième logement de dossier (34) comprenant un deuxième boulon de verrouillage (54), qui forment le mécanisme de verrouillage (46), la pluralité de deuxièmes éléments d'encliquetage (38) étant disposés au niveau d'une périphérie du premier et du deuxième boulon de verrouillage (48, 54), et le premier et le deuxième boulon de verrouillage (48, 54) pouvant être déplacés à chaque fois dans une direction le long de leur direction longitudinale afin de déplacer le deuxième élément d'encliquetage (38) du premier ou du deuxième logement de dossier (32, 34) entre sa position de verrouillage et sa position de libération.

2. Agencement de siège de passager selon la revendication 1, dans lequel, dans l'état de l'agencement de siège de passager (10) installé dans l'aéronef, l'élément de dossier (14) est pivoté dans l'état fixé au premier logement de dossier (32) par rapport à l'état fixé au deuxième logement de dossier (34) essentiellement de 90° ou de 180° par rapport à l'axe longitudinal de l'aéronef.

3. Agencement de siège de passager selon la revendication 1 ou 2, dans lequel en particulier l'au moins un premier élément d'encliquetage (36) est réalisé au niveau d'au moins une entretoise de connexion (40) de l'élément de dossier (14) et le premier et le deuxième logement de dossier (32, 34) sont chacun pourvus d'au moins une ouverture de réception (42, 44) présentant le deuxième élément d'encliquetage (38), dans laquelle l'entretoise de connexion (40) réalisée avec le premier élément d'encliquetage (36) peut être insérée, afin d'encliqueter le premier élément d'encliquetage (36) avec l'un des deuxièmes éléments d'encliquetage (38).

4. Agencement de siège de passager selon la revendication 1, dans lequel le mécanisme de verrouillage (46) comprend :
- au moins une unité de ressort qui sollicite le premier élément d'encliquetage (36) et/ou le deuxième élément d'encliquetage (38) du premier et/ou du deuxième logement de dossier (32, 34) dans la direction de leur/sa position de verrouillage ou de leur/sa position de libération ; et/ou
- un mécanisme de blocage (50, 56) bloquant le premier élément d'encliquetage (36) et/ou le deuxième élément d'encliquetage (38) du premier et/ou du deuxième logement de dossier (32, 34) dans leur/sa position de verrouillage et/ou leur/sa position de blocage, lequel peut être déplacé entre une position de blocage dans laquelle un déplacement du premier élément d'encliquetage (36) et/ou du deuxième élément d'encliquetage (38) du premier et/ou du deuxième logement de dossier (32, 34) entre leur/sa position de verrouillage et sa position de libération est bloqué, et une position de libération dans laquelle un déplacement du premier élément d'encliquetage (36) et/ou du deuxième élément encliquetage (38) du premier et/ou du deuxième logement de dossier (32, 34) entre leur/sa position de verrouillage et leur/sa position de libération est libéré.

5. Agencement de siège de passager selon l'une quelconque des revendications 1 à 4, dans lequel l'élément de siège (16) peut être fixé de manière amovible et avec transfert de charge au premier logement de dossier (32) dans une première position ou au deuxième logement de dossier (34) dans une deuxième position, l'élément de siège (16), dans l'état de l'agencement de siège de passager (10) installé dans l'aéronef, étant pivoté autour d'un axe parallèlement à un axe vertical de l'aéronef dans un état fixé au premier logement de dossier (32) par rapport à un état fixé au deuxième logement de dossier (34), et l'élément de dossier (14) pouvant être fixé au premier logement de dossier (32) dans un état dans lequel l'élément de siège (16) est fixé au deuxième logement de dossier (34), ou l'élément de dossier (14) pouvant être fixé au deuxième logement de dossier (34) dans un état dans lequel l'élément de siège (16) est fixé au premier logement de dossier (32).

6. Agencement de siège de passager selon la revendication 5, dans lequel, dans l'état de l'agencement de siège de passager (10) installé dans l'aéronef, l'élément de siège (16), est pivoté dans l'état installé au niveau du premier logement de dossier (32) par rapport à l'état installé au niveau du deuxième logement de dossier (34) essentiellement de 90° ou de 180° autour de l'axe parallèlement à l'axe vertical de l'aéronef.

7. Agencement de siège de passager selon la revendication 5 ou 6, dans lequel l'élément de siège (16) présente au moins un troisième élément d'encliquetage (58) complémentaire du deuxième élément d'encliquetage (38), lequel est prévu pour s'encliqueter de manière amovible avec au moins l'un des deuxièmes éléments d'encliquetage (38) réalisés dans le premier et le deuxième logement de dossier (32, 34), afin de fixer l'élément de siège (16) avec transfert de charge au support de siège (30) dans sa première ou sa deuxième position, l'au moins un troisième élément d'encliquetage (54) étant réalisé notamment au niveau d'au moins une entretoise de connexion (60) de l'élément de siège (16) qui peut être insérée dans l'au moins une ouverture de réception (42, 44) du premier ou du deuxième logement de dossier (32, 34) afin d'encliqueter le troisième élément d'encliquetage (58) avec l'un des deuxièmes éléments d'encliquetage (38).

8. Agencement de siège de passager selon l'une quelconque des revendications 5 à 7, dans lequel l'élément de siège (16) présente au moins un évidement (62) dans lequel, dans un état installé de l'élément de dossier (14) et de l'élément de siège (16) au niveau du support de siège (30), le premier ou le deuxième logement de dossier (32, 34) et/ou l'élément de dossier (14), en particulier l'au moins une entretoise de connexion (40) de l'élément de dossier (14), sont reçus en partie.

9. Agencement de siège de passager selon l'une quelconque des revendications 1 à 4, dans lequel l'élément de siège (16) est fixé au support de siège (30) et, dans la région du premier logement de dossier (32) est pourvu d'au moins un premier évidement (78) dans lequel, dans un état installé de l'élément de dossier (14) au niveau du premier logement de dossier (32), le premier logement de dossier (32) et/ou l'élément de dossier (14), en particulier l'au moins une entretoise de connexion (40) de l'élément de dossier (14), est/sont reçus en partie, et, dans la région du deuxième logement de dossier (34) est pourvu d'au moins un deuxième évidement (80) dans lequel, dans un état installé de l'élément de dossier (14) au niveau du deuxième logement de dossier (34), le deuxième logement de dossier (34) et/ou l'élément de dossier (14), en particulier l'au moins une entretoise de connexion (40) de l'élément de dossier (14), est/sont reçus en partie.

10. Agencement de siège de passager selon l'une quelconque des revendications 1 à 9, qui comprend en outre au moins un élément d'accoudoir (24) qui peut être fixé de manière amovible et avec transfert de charge à l'élément de dossier (14) et au support de siège (30).

11. Agencement de siège de passager selon la revendication 10, dans lequel l'élément d'accoudoir (24) comprend :
- un premier élément de connexion (64) qui est prévu pour s'encliqueter de manière amovible avec un deuxième élément de connexion complémentaire (66) monté au niveau de l'élément de dossier (14) afin de fixer l'élément d'accoudoir (24) avec transfert de charge à l'élément de dossier (14), en particulier le premier élément de connexion (64) et le deuxième élément de connexion (66) coopérant dans un état encliqueté l'un avec l'autre de telle sorte qu'un mouvement de rotation de l'élément d'accoudoir (24) par rapport à l'élément de dossier (14) soit bloqué et qu'un mouvement de translation de l'élément d'accoudoir (24) par rapport à l'élément de dossier (14) dans la direction d'une position de libération de l'élément d'accoudoir (24) soit permis afin de libérer le premier élément de connexion (64) du deuxième élément de connexion (66) ; et/ou
- un troisième élément de connexion (69) qui est prévu pour s'encliqueter de manière amovible avec un quatrième élément de connexion (70) monté au niveau du support de siège (30) afin de fixer l'élément d'accoudoir (24) avec transfert de charge au support de siège (30), le troisième élément de connexion (69) et le quatrième élément de connexion (70) coopérant notamment dans un état encliqueté l'un avec l'autre de telle sorte qu'un mouvement de rotation de l'élément d'accoudoir (24) par rapport au support de siège (30) soit bloqué et qu'un mouvement de translation de l'élément d'accoudoir (24) par rapport au support de siège (30) dans la direction de la position de libération de l'élément d'accoudoir (24) soit permis afin de libérer le troisième élément de connexion (69) du quatrième élément de connexion (70) ; et/ou
- un mécanisme de blocage supplémentaire (74), qui est prévu, dans un état de l'élément d'accoudoir (24) fixé à l'élément de dossier (14) et au support de siège (30), pour bloquer un mouvement de l'élément d'accoudoir (24) dans la direction de sa position de libération.

12. Système de siège de passager, comprenant :
- au moins un agencement de siège de passager (10) selon l'une quelconque des revendications 1 à 11, qui peut être connecté avec transfert de charge par le biais du cadre de support (26) à une structure (86) de l'aéronef ; et
- un agencement de table (88) qui, dans un état de l'agencement de siège de passager (10) installé dans l'aéronef, peut être connecté avec transfert de charge, dans une direction longitudinale de l'aéronef devant et/ou derrière l'agencement de siège de passager (10), à la structure (86) de l'aéronef.

13. Procédé d'installation d'un système de siège de passager dans un aéronef, comprenant les étapes suivantes :
- installation d'un agencement de siège de passager (10) selon l'une quelconque des revendications 1 à 11 dans l'aéronef par connexion avec transfert de charge du cadre de support (26) de l'agencement de siège de passager (10) à une structure (86) de l'aéronef ;
- libération de l'élément de dossier (14) hors du premier logement de dossier (32) du support de siège (30) ;
- fixation de l'élément de dossier (14) au deuxième logement de dossier (34) du support de siège (30) ; et
- installation d'un agencement de table (88) dans une direction longitudinale de l'aéronef devant ou derrière l'agencement de siège de passager (10) dans l'aéronef par connexion avec transfert de charge de l'agencement de table (88) à la structure (86) de l'aéronef.
